(19) Europäisches Patentamt
European Patent Office
Office européen des brevets

(11) EP 4 112 672 A1

(12) **EUROPEAN PATENT APPLICATION**
published in accordance with Art. 153(4) EPC

(43) Date of publication:
**04.01.2023 Bulletin 2023/01**

(21) Application number: **21759825.9**

(22) Date of filing: **25.02.2021**

(51) International Patent Classification (IPC):
***C08G 77/388*** *(2006.01)* ***C08G 77/42*** *(2006.01)*
***C08L 83/06*** *(2006.01)*

(52) Cooperative Patent Classification (CPC):
**C08G 77/388; C08G 77/42; C08L 83/06**

(86) International application number:
**PCT/JP2021/007192**

(87) International publication number:
**WO 2021/172468 (02.09.2021 Gazette 2021/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.02.2020 JP 2020029737**

(71) Applicants:
- **Shiseido Company, Ltd.**
  **Chuo-ku**
  **Tokyo 104-0061 (JP)**
- **OSAKA UNIVERSITY**
  **Suita-shi**
  **Osaka 565-0871 (JP)**

(72) Inventors:
- **MATSUKURA, Toshihiko**
  **Tokyo 104-0061 (JP)**
- **OGUCHI, Nozomi**
  **Tokyo 104-0061 (JP)**
- **TAKASHIMA, Yoshinori**
  **Suita-shi, Osaka 565-0871 (JP)**
- **HARADA, Akira**
  **Suita-shi, Osaka 565-0871 (JP)**
- **OSAKI, Motofumi**
  **Suita-shi, Osaka 565-0871 (JP)**

(74) Representative: **Cabinet Beau de Loménie**
**158, rue de l'Université**
**75340 Paris Cedex 07 (FR)**

(54) **RESIN MATERIAL INCLUDING SILOXANE-BOND-CONTAINING POLYMER HAVING HOST GROUP AND/OR GUEST GROUP**

(57) An object of the present invention is to provide a resin material which contains a polymer compound having a host group and/or guest group and exhibits excellent solubility. The present invention relates to a resin material comprising a host body consisting of a polymer compound having a host group and a guest body consisting of a polymer compound having a guest group, or a host-guest body consisting of a polymer compound having a host group and a guest group, wherein, at least one of the polymer compound having the host group or the polymer compound having the guest group, or the polymer compound having the host group and the guest group, has a siloxane bond.

EP 4 112 672 A1

## Description

FIELD

The present disclosure relates to a resin material comprising a polymer compound having a siloxane bond and a host group and/or guest group.

BACKGROUND

It is known to form an aggregate by introducing a host group and/or guest group into a polymer compound so that the polymer compounds bind to each other via a host-guest interaction. The bonding based on the host-guest interaction has been used for the development of a variety of novel materials because it has properties different from a conventional bonding, such as a covalent bond, in terms of strength, selectivity, and reversibility of the binding.

Patent Document 1 discloses an aggregate formed from a host body consisting of a polymer having a host group in a side chain and a guest body consisting of a polymer having a guest group in a side chain, which are brought into contact with each other.

Patent Document 2 discloses a method for producing an aqueous solution of a host group-containing monomer, a guest group-containing monomer, and an acrylic monomer.

Non-Patent Documents 1 to 3 describe supramolecular structures based on a host-guest interaction.

[CITATION LIST]

[PATENT LITERATURE]

[Patent Document 1] WO2012/036069A
[Patent Document 2] WO2013/162019A

[NON-PATENT LITERATURE]

[Non-Patent Document 1] Macromolecules 2013, 46(11), 4575-4579
[Non-Patent Document 2] Macromolecules 2017, 50(8), 3254-3261
[Non-Patent Document 3] Macromolecules 2019, 52(7), 2659-2668

SUMMARY

[TECHNICAL PROBLEM]

In the conventional resin material based on a polymer compound having a host group and/or guest group, solubility of a polymer compound constituting the resin material in a solvent is low, and it is sometimes difficult to mix them with other components.

Accordingly, it is an object of the present disclosure to provide a resin material which contains a polymer compound having a host group and/or guest group and exhibits excellent solubility.

The present inventors have intensively studied to solve such a problem, and have conceived of the present invention.

[SOLUTION TO PROBLEM]

Accordingly, the invention according to the present disclosure includes the following embodiments:

<Embodiment 1> A resin material comprising a host body consisting of a polymer compound having a host group and a guest body consisting of a polymer compound having a guest group, or a host-guest body consisting of a polymer compound having a host group and a guest group, wherein, at least one of the polymer compound having the host group and the polymer compound having the guest group, or the polymer compound having the host group and the guest group, has a siloxane bond.

<Embodiment 2> The resin material according to embodiment 1, wherein the polymer compound having the host group and the polymer compound having the guest group have a siloxane bond.

<Embodiment 3> The resin material according to embodiment 1, wherein at least one of the polymer compound having the host group and the polymer compound having the guest group, or the polymer compound having the host group and the guest group, has a siloxane bond in the main chain of the polymer.

<Embodiment 4> The resin material according to embodiment 3, wherein the polymer compound having the host group and the polymer compound having the guest group have a siloxane bond in the main chain of the polymer.

<Embodiment 5> The resin material according to one of embodiments 1 to 4, wherein

the polymer compound having the host group has the host group in a side chain thereof, and
the polymer compound having the guest group has the guest group in a side chain thereof.

<Embodiment 6> The resin material according to one of embodiments 1 to 4, wherein

the polymer compound having the host group has the host group in a side chain thereof, and
the polymer compound having the guest group has the guest group in a terminal thereof.

<Embodiment 7> The resin material according to one of embodiments 1 to 4, wherein

the polymer compound having the host group has the host group in a terminal thereof, and
the polymer compound having the guest group has the guest group in a side chain thereof.

<Embodiment 8> The resin material according to one of embodiments 1 to 7, wherein at least one of the polymer compound having the host group and the polymer compound having the guest group, or the polymer compound having the host group and the guest group, is cross-linked.

<Embodiment 9> The resin material according to one of embodiments 1 to 8, wherein at least one of the polymer compound having the host group and the polymer compound having the guest group, or the polymer compound having the host group and the guest group, has a structure represented by the following formula (1):

[Chem 1]

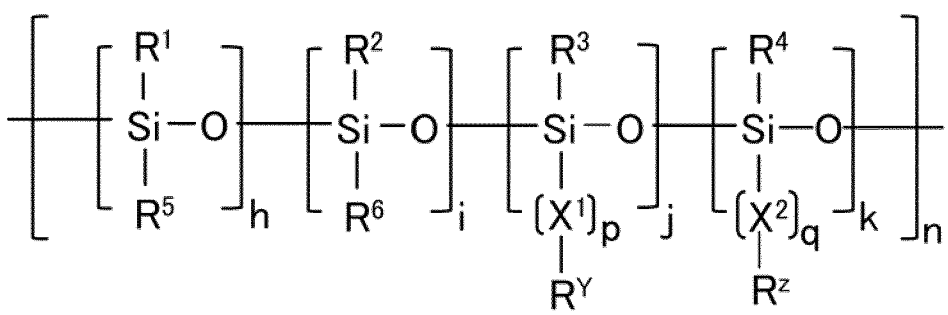

···(1)

[In Formula (1), $R^1$ to $R^6$ are each independently a hydrogen atom, or an alkyl group, a cycloalkyl group, an alkenyl group, an alkoxy group, a cycloalkoxy group, a hydroxy group, a carboxyl group, an aldehyde group, an aryl group, an aryloxy group, a monovalent heterocyclic group, a monovalent spirocyclic compound, a monovalent condensed-ring compound, a group represented by $-R^{R1}$ -COOH, or a group represented by $-R^{R2}$-C(O)O-$R^{R3}$, wherein these groups may have a substituent, and wherein $R^{R1}$, $R^{R2}$ and $R^{R3}$ are each an alkyl group or alkylene group having 1 to 10 carbon atoms; $X^1$ and $X^2$ are each independently O, $Si(OH)_2$, $Si(R^{10})_2$, N(H) or $N(COCH_3)$, or an urethane bond, an urea bond, an ether bond, an amide bond, or an ester bond, or a carbonyl group, an alkylene group, a cycloalkylene group, an alkenylene group, an alkoxylene group, a divalent heterocyclic group, an urethane group, an urea group, or an arylene groups, and these groups may have a substituent; $R^{10}$ is a hydrogen atom, or an alkyl group, a cycloalkyl group, an alkenyl group, an alkoxy group, a cycloalkoxy group, a hydroxy group, a carboxyl group, an aldehyde group, an aryl group, an aryloxy group, or a heterocyclic group, and these groups may have a substituent; a plurality of $R^{10}$ may be the same or different; each of $X^1$ and $X^2$ may be the same or different if there are a plurality of them; p and q each independently represent an integer of 0 or more; $R^Y$ is a host group; $R^Z$ is a guest group; h, i, j, and k each represent an integer of 0 or more; and they may be the same or different from each other; at least j or k represents an integer of 1 or more; n represents an integer of 1 or more.]

<Embodiment 10> The resin material according to embodiment 9, wherein the polymer compound having the host group and the polymer compound having the guest group have the structure represented by the formula (1).
<Embodiment 11> The resin material according to embodiment 9 or 10, wherein at least one of the polymer compound having the host group and the polymer compound having the guest group, or the polymer compound having the host group and the guest group, has the structure represented by the formula (1) in the main chain of the polymer.
<Embodiment 12> The resin material according to embodiment 9 or 10, wherein at least one of the polymer compound having the host group and the polymer compound having the guest group, or the polymer compound having the host group and the guest group, has:

a vinyl main chain, an acryl main chain, an urethane main chain, an epoxy main chain, a polyimide main chain, a polyester main chain, a poly-urea main chain, or a polycarbonate main chain, and
a side chain having the structure represented by the formula (1).

<Embodiment 13> The resin material according to one of embodiments 1 to 12, wherein at least one of the polymer compound having the host group and the polymer compound having the guest group, or the polymer compound having the host group and the guest group, has a structural unit represented by the following formula (2):

[Chem 2]

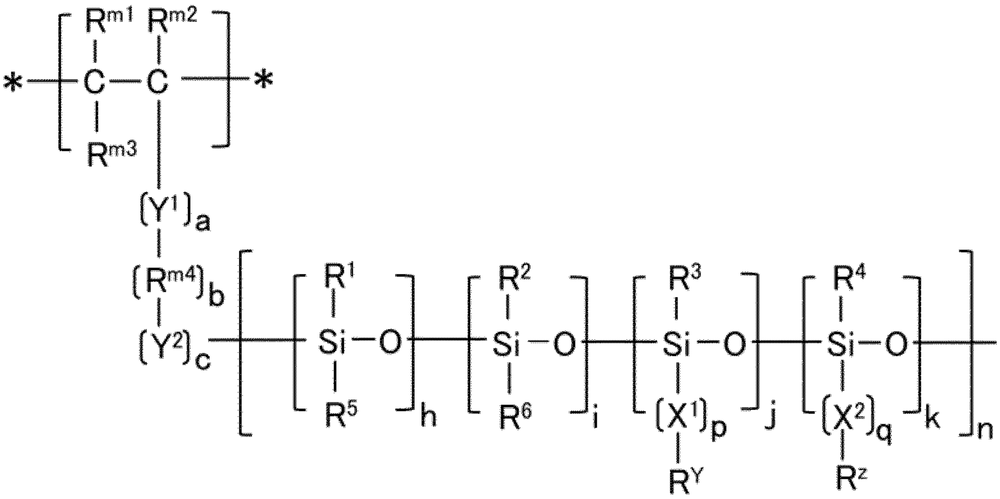

···(2)

[In Formula (2), $R^1$-$R^6$ are each independently a hydrogen atom, or an alkyl group, a cycloalkyl group, an alkenyl group, an alkoxy group, a cycloalkoxy group, a hydroxy group, a carboxyl group, an aldehyde group, an aryl group, an aryloxy group, a monovalent heterocyclic group, a monovalent spirocyclic compound, a monovalent condensed-ring compound, a group represented by $-R^{R1}$ -COOH, or a group represented by $-R^{R2}$-C(O)O-$R^{R3}$, wherein these groups may have a substituent, and wherein $R^{R1}$, $R^{R2}$ and $R^{R3}$ are each an alkyl group or alkylene group having 1 to 10 carbon atoms; $X^1$ and $X^2$ are each independently O, $Si(OH)_2$, $Si(R^{10})_2$, N(H), or $N(COCH_3)$, or an urethane bond, an urea bond, an ether bond, an amide bond, or an ester bond, or a carbonyl group, an alkylene group, a cycloalkylene group, an alkenylene group, an alkoxylene group, a divalent heterocyclic group, an urethane group, an urea group, or an arylene groups, and these groups may have a substituent; $R^{10}$ is a hydrogen atom, or an alkyl group, a cycloalkyl group, an alkenyl group, an alkoxy group, a cycloalkoxy group, a hydroxy group, a carboxyl group, an aldehyde group, an aryl group, an aryloxy group, or a heterocyclic group, and these groups may have a substituent; a plurality of $R^{10}$ may be the same or different; each of $X^1$ and $X^2$ may be the same or different if there are a plurality of them; p and q each independently represent an integer of 0 or more; $R^Y$ is a host group; $R^Z$ is a guest group; h, i, j, and k each represent an integer of 0 or more, these may be the same or different from each other, and at least j or k is an integer of 1 or more; n represents an integer of 1 or more; $R^{m1}$ to $R^{m3}$ are each independently a hydrogen atom or an alkyl group, $Y^1$ is an ether bond, an amide bond, or an ester bond; $R^{m4}$ is an alkylene group, a cycloalkylene group, an alkenylene group, an alkoxylene group, or an arylene group, and these groups may have a substituent, and $Y^2$ is an ether bond, an amide bond, or an ester bond, O, Si $(OH)_2$, $Si(R^{10})_2$,N(H), or $N(COCH_3)$; and a, b, and c each independently represent an integer of 0 to 3; * represents a single bond constituting the main chain of the polymer compound.]
<Embodiment 14> The resin material according to embodiment 13, wherein the polymer compound having the host group and the polymer compound having the guest group have the structure represented by the formula (2).

<Embodiment 15> The resin material according to embodiment 13 or 14, wherein at least one of the polymer compound having the host group and the polymer compound having the guest group, or the polymer compound having the host group and the guest group, further has a structural unit represented by the following formula (3):

[Chem 3]

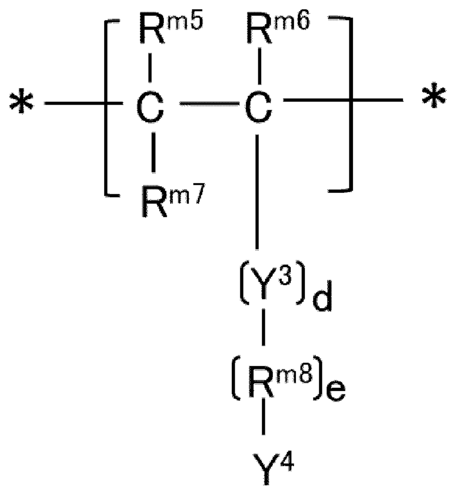

· · · (3)

[In Formula (3), $R^{m5}$ to $R^{m7}$ are each independently a hydrogen atom or an alkyl group; $Y^3$ is an ether bond, an amide bond, or an ester bond; $R^{m8}$ is an alkylene group, a cycloalkylene group, an alkenylene bond, an alkoxylene group, or an arylene group, and these groups may have a substituent; $Y^4$ is a hydrogen atom, or an alkyl group, a hydroxyl group, $Si(OH)_3$, $Si(R^{10})_3$, $NH_2$, $C(O)CH_3$, $C(O)NH_2$, or $N(COCH_3)$; d and e are each independently an integer of 0 to 3; * represents a single bond constituting the main chain of the polymer compound.]

<Embodiment 16> The resin material according to one of embodiments 9 to 15, wherein, in the formula (1) and/or formula (2),

the host group represented by $R^Y$ is α-cyclodextrin, β- cyclodextrin or γ- cyclodextrin, and
the guest group represented by $R^Z$ is an alkyl group which can have a substituent, or an aryl group which can have a substituent.

<Embodiment 17> The resin material according to one of embodiments 9 to 16, wherein, in the formula (1) and/or formula (2), $R^1$ , $R^2$ , $R^3$, $R^4$ and $R^5$ are a methyl group.

<Embodiment 18> The resin material according to one of embodiments 9 to 16, wherein, in the formula (1) and/or formula (2),

k=0, and
$R^1$, $R^2$ , $R^3$, $R^5$ and $R^6$ are an alkyl group.

<Embodiment 19> The resin material according to one of embodiments 9 to 16, wherein, in the formula (1) and/or formula (2),

k=0
$R^1$, $R^2$ , $R^3$ and $R^5$ are a methyl group, and
$R^6$ is a pentyl group.

<Embodiment 20> The resin material according to one of embodiments 9 to 19, wherein, in the formula (1) and/or formula (2),

$(X^1)_p$ is $-(CH_2)_3-N(COCH_3)-$, and j is an integer of 1 or more, and/or
$(X^2)_q$ is $-R^{11}-CO-O-$ or $-R^{11}-CO-NH-$, wherein $R^{11}$ is an alkylene group having 1 to 12 carbon atoms, which can have a substituent, and k is an integer of 1 or more.

<Embodiment 21> The resin material according to one of embodiments 1 to 20, wherein the host group and the

guest group are selected from one of the following combinations (a) to (c):

(a) the host group is α-cyclodextrin and
the guest group is at least one selected from the group consisting of (1) a linear alkyl group of 4 to 18 carbon atoms, (2) a linear alkyl group of 4 to 18 carbon atoms having a hydroxy group, (3) a linear alkyl group of 4 to 18 carbon atoms having a carboxyl group, (4) a linear alkyl group of 4 to 18 carbon atoms having an amino group, (5) a cyclic alkyl group, (6) a phenyl group, (7) an azobenzene group, and (8) a cinnamic acid group;
(b) the host group is β-cyclodextrin and
the guest group is at least one selected from the group consisting of (1') t-butyl group, (2') an adamantyl group, (3') an aryl group, (4') an aryl group having a hydroxyl group, (5') an aryl group having a carboxyl group, (6') an aryl group having an amino group, (7') a ferrocenyl group, (8') an azobenzene group, and (9') a dansyl group;
(c) the host group is γ-cyclodextrin and
the guest group is at least one selected from the group consisting of (1") an alkyl group of up to 18 carbon atoms, (2") an alkyl group of up to 18 carbon atoms having a hydroxy group, (3") an alkyl group of up to 18 carbon atoms having a carboxyl group, (4") an alkyl group of up to 18 carbon atoms having an amino group, (5") an adamantyl group, (6") a group having clusters composed of carbon atoms, (7") a dansyl group having an aryl group, (8") a ferrocenyl group, and (9") an anthracenyl group.

[ADVANTAGEOUS EFFECTS OF INVENTION]

According to the present disclosure, there is provided a resin material comprising a polymer compound having a host group and/or guest group and exhibits excellent solubility.

BRIEF DESCRIPTION OF DRAWINGS

[Figure 1] Figure 1 shows a photograph of a film according to Example 5.
[Figure 2] Figure 2 is a graph showing the result of a tensile test for the film according to Example 5.
[Figure 3] Figure 3 shows a photograph of a film according to Example 6.
[Figure 4] Figure 4 is a graph showing the result of a tensile test for the film according to Example 6.

DESCRIPTION OF EMBODIMENTS

<<Resin material>>

The resin material according to the present disclosure:

comprises a host body consisting of a polymer compound having a host group and a guest body consisting of a polymer compound having a guest group, or a host-guest body consisting of a polymer compound having a host group and a guest group,
wherein, at least one of the polymer compound having the host group and the polymer compound having the guest group, or the polymer compound having the host group and the guest group, has a siloxane bond.

In the conventional resin material based on a polymer compound having a host group and/or guest group, solubility of the polymer in a solvent was sometimes insufficient.
On the other hand, the polymer compound contained in the resin material according to the present disclosure has a siloxane bond, whereby solubility is relatively improved. Without wishing to be bound by theory, it is considered that since the polymer compound contained in the resin material of the present disclosure has a siloxane bond, the solubility in a nonpolar solvent, such as hydrocarbon oil or silicone oil, becomes relatively high.
When the solubility of the polymer compound constituting the resin material is good, it is advantageous because, for example, good film formability is obtained when the resin material is used to form a film. In other words, it is considered that, since the resin material according to the present disclosure can be dissolved in a nonpolar solvent, coatability is improved; further, since the film formation can be performed by volatilizing a nonpolar solvent, a relatively uniform film can be easily formed.
Further, the resin material according to the present disclosure contains a polymer compound having a host group and/or guest group. Such a resin material can form a film through binding of the polymer compounds via a host-guest interaction. Since the bonding via the host-guest interaction is non-covalent, such a film is more elastic (i.e., having

less Young's modulus) as compared to a case where the polymer is bound by a covalent bonding as in prior art. Therefore, it is considered that a film formed from the resin material of the present application is excellent in elasticity and extensibility.

Further, since a polymer compound having a siloxane bond is relatively chemically stable and hardly oxidized and decomposed, the resin material according to the present disclosure may be superior in chemical stability, as compared to, for example, a polymer compound having only a carbon skeleton.

The resin material according to the present disclosure can be used, for example, for a coating agent and for cosmetics.

<Host group and guest group>

"Host-guest interaction" refers to a bond formed between a host group and a guest group. The host group binds to the guest group through the inclusion of the guest group. The host-guest interaction occurs when the size of the guest group is suitable to be incorporated into the interior space of the host group and when the interaction between the host group and the guest group includes at least one of a hydrophobic interaction, a hydrogen bonding, an electrostatic interaction, and a coordination bonding.

(Host group)

Examples of the host group include cyclodextrin (CD). Specific examples thereof include α-cyclodextrin, β-cyclodextrin, and γ-cyclodextrin. When these groups are used as a host group, a stable host-guest interaction can be formed.

(Guest group)

The guest group is not particularly limited as long as it can act as a guest group with respect to the corresponding host group. Examples of the guest group include an alkyl group which may have a substituent, and an aryl group which may have a substituent. As the guest group, the alkyl group and aryl group which may have a substituent have 1 to 18 carbon atoms, preferably 3 to 12 carbon atoms, and more preferably 3 to 9 carbon atoms. Examples of the guest group further include a trialkylsilyl group (e.g., a trimethylsilyl group, a triethylsilyl group, and a tripropylsilyl group, particularly a trimethylsilyl group).

Among the guest group, examples of the alkyl group which may have a substituent include a linear, branched or cyclic alkyl group with 1 to 18 carbon atoms (C1 to C18). Specific examples thereof include an alkyl group such as methyl, ethyl, n-propyl, isopropyl, n-butyl, isobutyl, sec-butyl, tert-butyl, pentyl, cyclopentyl, hexyl, cyclohexyl, isohexyl, dodecyl, octadecyl, and adamantyl group. Of these, the adamantyl group or the butyl group are preferable, and the adamantyl group is particularly preferable. The alkyl group may have, for example, 1 to 3 substituents, such as a halogen atom (e.g., fluorine, chlorine, bromine, etc.), a carboxyl group, an ester group, an amide group, or a hydroxyl group which may be optionally protected. It may also be an alkyl group obtained by bonding ferrocene, which is an organometallic complex, as a substituent.

Among the guest group, examples of the aryl group which may have a substituent include an aryl group having a single ring or two or more rings. Specific examples thereof include phenyl, triyl, xylyl, naphthyl, anthryl, and phenanthryl group. The aryl group may have, for example, 1 to 3 substituent, such as an alkyl group (e.g., C1 to C18 alkyl groups), a halogen atom (e.g., fluorine, chlorine, bromine, etc.), a carboxyl group, an ester group, an amide group, an azo group with an aryl group, or a hydroxyl group which may be protected.

(Combinations of host group and guest group)

In one embodiment according to the present disclosure, the host group and the guest group in the resin material are any one of the following combinations (a) to (c):

(a) the host group is an α-cyclodextrin and
the guest group is at least one selected from the group consisting of (1) a linear alkyl group of 4 to 18 carbon atoms, (2) a linear alkyl group of 4 to 18 carbon atoms having a hydroxy group, (3) a linear alkyl group of 4 to 18 carbon atoms having a carboxyl group, (4) a linear alkyl group of 4 to 18 carbon atoms having an amino group, (5) a cyclic alkyl group, (6) a phenyl group, (7) an azobenzene group, and (8) a cinnamic acid group;

(b) the host group is β-cyclodextrin and
the guest group is at least one selected from the group consisting of (1') t-butyl group, (2') an adamantyl group, (3') an aryl group, (4') an aryl group having a hydroxyl group, (5') an aryl group having a carboxyl group, (6') an aryl group having an amino group, (7') a ferrocenyl group, (8') an azobenzene group, and (9') a dansyl group;

(c) the host group is γ-cyclodextrin and
the guest group is at least one selected from the group consisting of (1") an alkyl group of up to 18 carbon atoms, (2") an alkyl group of up to 18 carbon atoms having a hydroxy group, (3") an alkyl group of up to 18 carbon atoms having a carboxyl group, (4") an alkyl group of up to 18 carbon atoms having an amino group, (5") an adamantyl group, (6") a group having clusters composed of carbon atoms, (7") a dansyl group having an aryl group, (8") a ferrocenyl group, and (9") an anthracenyl group.

<Polymer compound>

The term "polymer compound" means a polymer formed from one or more kinds of monomers, and in particular, a polymer having a molecular weight distribution and having a number average molecular weight in terms of polystyrene of $1\times10^3$ or more (e.g., $1\times10^3$ to $1\times10^8$). The polymer compound may be a block copolymer, a random copolymer, an alternating copolymer, or a graft copolymer, or may be another type of polymer.

The polymer compound having the host group and/or guest group according to the present disclosure may be a polymer formed from a single monomer, or may be a copolymer, a block copolymer, or a graft copolymer.

(Polymer compound having siloxane bond)

In the resin material according to the present disclosure, at least one of the polymer compound having a host group and the polymer compound having a guest group, or the polymer compound having a host group and a guest group, contains a siloxane bond.

When the polymer compound having a host group and/or guest group according to the present disclosure contains a siloxane bond, the silicon atom (Si) constituting the siloxane bond preferably has a hydrogen atom or a group represented by $R^S$ . Here, $R^S$ is an alkyl group, a cycloalkyl group, an alkenyl group, an alkoxy group, a cycloalkoxy group, a hydroxy group, a carboxyl group, an aldehyde group, an aryl group, an aryloxy group, or a monovalent heterocyclic group, and these groups may have a substituent; if there are multiple $R^S$, they may be identical or different from each other. In particular, $R^S$ may be an alkyl group having 1 to 12 carbon atoms or an aryl group which may have a substituent. $R^S$ is preferably an alkyl group having 1 to 12 carbon atoms, more preferably 1 to 6 carbon atoms, and particularly preferably 1 or 2 carbon atoms.

Preferably, at least one of the polymer compound having a host group or the polymer compound having a guest group, or the polymer compound having a host group and a guest group, has a polyorganosiloxane main chain. When the polymer compound contained in the resin material according to the present disclosure has a siloxane bond in the main chain thereof, or, has a polyorganosiloxane main chain, it is preferable because chemical stability of the resin material is further improved and the heat resistance as well as the weather resistance may be further improved, and because relatively excellent solubility in hydrocarbon and silicone is obtained.

The polymer compound according to the present disclosure may have a polyorganosiloxane unit in the main chain or a side chain thereof. When the polymer compound according to the present disclosure contains a polyorganosiloxane unit, the proportion of the polyorganosiloxane unit may be 20% by weight or more, 30% by weight or more, or 40% by weight or more, and/or may be 100% by weight or less, 90% by weight or less, 80% by weight or less, 70% by weight or less, or 60% by weight or less, based on the entire polymer compound. When the proportion of the polyorganosiloxane unit is within this range, the chemical stability and solubility of the polymer compound are further improved.

Particularly preferably, both of the polymer compound having a host group and the polymer compound having a guest group contain a siloxane bond in the main chain of the polymer. When the polymer compound having a host group and the polymer compound having a guest group contained in the resin material according to the present disclosure both contain a siloxane bond in the main chain thereof, the heat resistance and the weather resistance of the resin material as well as the solubility in hydrocarbon and silicone are further improved.

When the polymer compound having a host group and/or guest group according to the present disclosure contains a siloxane bond, examples of such a polymer compound (hereinafter also referred to as a "siloxane polymer compound") include polyorganosiloxane; a block copolymer of a polyorganosiloxane and a vinyl resin, an acrylic resin, an urethane resin, an epoxy resin, a polyimide resin, a polyester resin, or a polycarbonate resin; and a graft copolymer in which a polyorganosiloxane is grafted to a vinyl resin, an acrylic resin, an urethane resin, an epoxy resin, a polyimide resin, a polyester resin, or a polycarbonate resin. These resins and/or polyorganosiloxanes may have a substituent other than the host group and/or guest group. Further, when the polymer compound having a host group and/or guest group according to the present disclosure contains a siloxane bond, examples of such a polymer compound include an acrylic silicone resin, a graft copolymer based on acrylic silicone, a copolymer of polynorbornene and silicone, and a copolymer of pullulan and silicone.

Examples of polyorganosiloxane include methylpolysiloxane, phenylpolysiloxane, and methylphenylpolysiloxane, and these polysiloxanes may have a substituent other than the host group and/or guest group in the main chain

and/or a side chain. The polymer compound according to the present disclosure particularly preferably has a methylpolysiloxane skeleton.

Preferably, at least one of the polymer compound having a host group and the polymer compound having a guest group, or the polymer compound having a host group and a guest group, has a structure represented by the following formula (1):

[Chem 4]

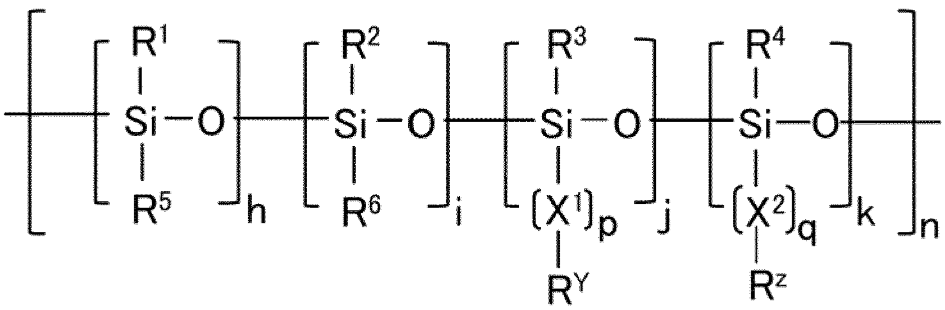

···(1)

[In Formula (1), $R^1$ to $R^6$ are each independently a hydrogen atom, or an alkyl group, a cycloalkyl group, an alkenyl group, an alkoxy group, a cycloalkoxy group, a hydroxy group, a carboxyl group, an aldehyde group, an aryl group, an aryloxy group, a monovalent heterocyclic group, a monovalent spirocyclic compound, a monovalent condensed-ring compound, a group represented by $-R^{R1}$ -COOH, or a group represented by $-R^{R2}$-C(O)O-$R^{R3}$, wherein these groups may have a substituent, and wherein $R^{R1}$, $R^{R2}$ and $R^{R3}$ are each an alkyl group or an alkylene group having 1 to 10 carbon atoms; $X^1$ and $X^2$ are each independently O, $Si(OH)_2$, $Si(R^{10})_2$, N(H) or $N(COCH_3)$, or an urethane bond, an urea bond, an ether bond, amide bond or an ester bond, or a carbonyl group, an alkylene group, a cycloalkylene group, an alkenylene group, an alkoxylene group, a divalent heterocyclic group, an urethane group, an urea group, or an arylene groups, and these groups may have a substituent; $R^{10}$ is a hydrogen atom, or an alkyl group, a cycloalkyl group, an alkenyl group, an alkoxy group, a cycloalkoxy group, a hydroxy group, a carboxyl group, an aldehyde group, an aryl group, an aryloxy group, or a heterocyclic group, and these groups may have a substituent; a plurality of $R^{10}$ may be the same or different; each of $X^1$ and $X^2$ may be the same or different if there are a plurality of them; p and q each independently represent an integer of 0 or more; $R^Y$ is a host group; $R^Z$ is a guest group; h, i, j and k each represent an integer of 0 or more; and they may be the same or different from each other; at least j or k represents an integer of 1 or more; n represents an integer of 1 or more.]

Preferably, in the resin material, the polymer compound having a host group and the polymer compound having a guest group have the structure represented by the above formula (1).

When the polymer compound contained in the resin material according to the present disclosure has the structure represented by the above formula (1), it is possible that the polymer compound has a structure in which a terminal group is bonded to both ends of the structure represented by the above formula (1).

As the terminal group ($R^E$) which can be bonded to the terminal of the structure represented by the above formula (1), mention may be made of an alkyl group having 1 to 10 carbon atoms, in particular an alkyl group having 1 to 6 carbon atoms, or a group represented by Si $(R^{E1})_3$, wherein R is a hydrogen atom or an alkyl group having 1 to 10 carbon atoms, or an aryl group.

In a preferred embodiment according to the present disclosure, at least one of the polymer compound having a host group and the polymer compound having a guest group, or the polymer compound having a host group and a guest group, has the structure represented by the above formula (1) in the main chain of the polymer.

The polymer compound according to the present disclosure may be, for example, a block copolymer of a vinyl resin, an acrylic resin, a urethane resin, an epoxy resin, a polyimide resin, a polyester resin, or a polycarbonate resin, and a polyorganosiloxane having the structure represented by the above formula (1).

In another preferred embodiment according to the present disclosure, the polymer compound contained in the resin material has:

a vinyl backbone (i.e., a vinyl main chain), an acrylic backbone, an urethane backbone, an epoxy backbone, a polyimide backbone, a polyester backbone, a polyurea backbone, or a polycarbonate backbone, and
a side chain having the structure represented by the above formula (1).

Specifically, the polymer compound according to the present disclosure may be, for example, a graft polymer

in which the polyorganosiloxane having the structure represented by the above formula (1) is grafted to a vinyl resin, an acrylic resin, an urethane resin, an epoxy resin, a polyurea resin, a polyimide resin, a polyester resin, or a polycarbonate resin.

In another preferred embodiment according to the present disclosure, at least one of the polymer compound having a host group and the polymer compound having a guest group, or the polymer compound having a host group and a guest group, has the structural unit represented by the following formula (2):

[Chem 5]

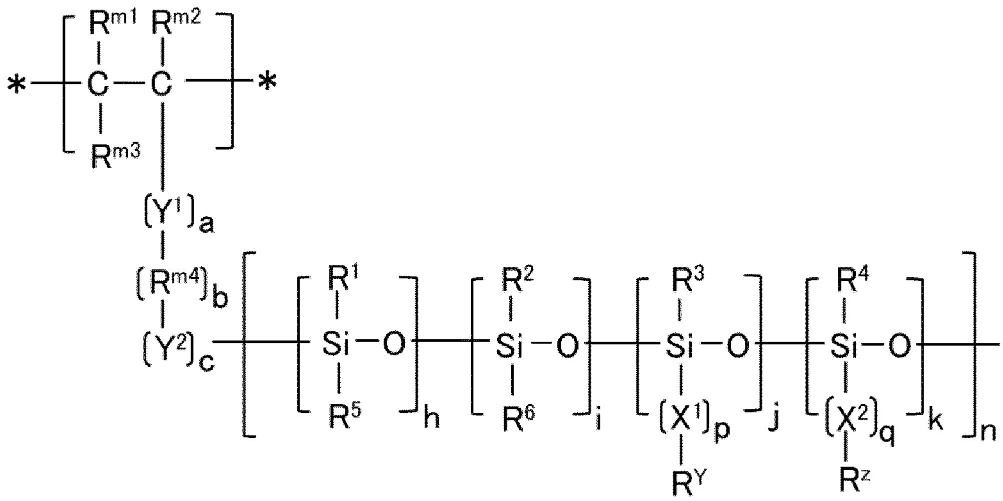

· · · (2)

[In Formula (2), $R^1$-$R^6$ are each independently a hydrogen atom, or an alkyl group, a cycloalkyl group, an alkenyl group, an alkoxy group, a cycloalkoxy group, a hydroxy group, a carboxyl group, an aldehyde group, an aryl group, an aryloxy group, a monovalent heterocyclic group, an urethane group, an urea group, a heterocyclic group, a monovalent spirocyclic compound, a monovalent condensed-ring compound, a group represented by $-R^{R1}$ -COOH, or a group represented by $-R^{R2}$-C(O)O-$R^{R3}$, wherein these groups may have a substituent, and wherein $R^{R1}$, $R^{R2}$ and $R^{R3}$ are each an alkyl group or alkylene group having 1 to 10 carbon atoms; $X^1$ and $X^2$ are each independently O, $Si(OH)_2$, $Si(R^{10})_2$, N(H), or $N(COCH_3)$, or an urethane bond, an urea bond, or an ether bond, an amide bond, or an ester bond, or a carbonyl group, an alkylene group, a cycloalkylene group, an alkenylene group, an alkoxylene group, a divalent heterocyclic group, an urethane group, an urea group, or arylene groups, and these groups may have a substituent; $R^{10}$ is a hydrogen atom, or an alkyl group, a cycloalkyl group, an alkenyl group, an alkoxy group, a cycloalkoxy group, a hydroxy group, a carboxyl group, an aldehyde group, an aryl group, an aryloxy group, or a heterocyclic group, and these groups may have a substituent; a plurality of $R^{10}$ may be the same or different; each of $X^1$ and $X^2$ may be the same or different if there are a plurality of them; p and q each independently represent an integer of 0 or more; $R^Y$ is a host group; $R^Z$ is a guest group; h, i, j and k each represent an integer of 0 or more, these may be the same or different from each other, and at least j or k is an integer of 1 or more; n represents an integer of 1 or more; $R^{m1}$ to $R^{m3}$ are each independently a hydrogen atom or an alkyl group, $Y^1$ is an ether bond, an amide bond, or an ester bond; $R^{m4}$ is an alkylene group, a cycloalkylene group, an alkenylene group, an alkoxylene group, or an arylene group, and these groups may have a substituent, and $Y^2$ is an ether bond, an amide bond, or an ester bond, O, $Si(OH)_2$, $Si(R^{10})_2$,N(H), or $N(COCH_3)$; and a, b and c each independently represent an integer of 0 to 3; * represents a single bond constituting the main chain of the polymer compound.]

In a preferred embodiment according to the present disclosure, at least one of the polymer compound having a host group or the polymer compound having a guest group, or the polymer compound having a host group and a guest group, further has, in addition to the structural unit represented by the above formula (2), a structural unit represented by the following formula (3):

[Chem 6]

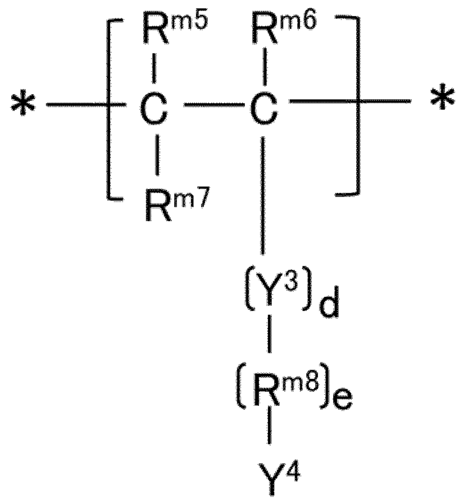

...(3)

[In Formula (3), $R^{m5}$ to $R^{m7}$ are each independently a hydrogen atom or an alkyl group, $Y^3$ is an ether bond, an amide bond, or an ester bond; $R^{m8}$ is an alkylene group, a cycloalkylene group, an alkenylene group, an alkoxylene group, or an arylene group, and these groups may have a substituent; $Y^4$ is a hydrogen atom, an alkyl group, a hydroxy group, $Si(OH)_3$, $Si(R^{10})_3$, $NH_2$, $C(O)CH_3$, $C(O)NH_2$, or $N(COCH_3)$; d and e each independently represent an integer of 0 to 3; and * represents a single bond constituting the main chain of the polymeric compound].

Preferably, the polymer compound having a host group and the polymer compound having a guest group have the structural unit represented by the above formula (2) and, optionally, the structural unit represented by the above formula (3).

A terminal group ($R^E$) may be bonded to a terminal of the polymer compound having the structural unit represented by the above formula (2). The terminal group include an alkyl group having 1 to 10 carbon atoms or a group represented by $Si(R^{E1})_3$, where $R^{E1}$ is a hydrogen atom or an alkyl group having 1 to 10, 1 to 6, 1 to 3, or 1 to 2 carbon atoms, or an aryl group.

The polymer compound having the structural units represented by the above formula (2) and formula (3) may be a random copolymer, a block copolymer, or an alternating sequence copolymer, etc., and the order of the sequence of the constitutional units is not particularly limited.

The ratio of the structural unit in the polymer compound having the structural unit represented by the above formula (2) is not particularly limited. For example, with respect to the whole structural units (monomer units) constituting the polymer compound having the structural unit represented by the above formula (2), the ratio of the constitutional unit represented by the above formula (2) may be 0.01 mol% or more, 0.1 mol% or more, 1.0 mol% or more, 5 mol% or more, 10 mol% or more, or 15 mol% or more, and/or may be 90 mol% or less, 75 mol% or less, 50 mol% or less, 25 mol% or less, or 20 mol% or less.

Further, with respect to the whole constitutional units (monomer units) constituting the structural units represented by the above formula (2) and formula (3), the ratio of the structural unit represented by the above formula (2) may be 0.01 mol% or more, 0.1 mol% or more, 1.0 mol% or more, 5 mol% or more, 10 mol% or more or 15 mol% or more, and/or 30 mol% or less, 25 mol% or less or 20 mol% or less, and the content ratio of the constitutional unit represented by the above formula (3) is 70 mol% or more and 75 mol% or more or 80 mol% or more, and/or may be 99.99 mol% or less, 99.9 mol% or less, 99 mol% or less, 95 mol% or less, or 90 mol% or less.

In formula (2) above, each of $R^{m1}$ to $R^{m3}$ is independently a hydrogen atom or an alkyl group, preferably a hydrogen atom or an alkyl group having 1 to 12, 1 to 6 or 1 to 3 carbon atoms, and particularly preferably a hydrogen atom. $R^{m1}$ to $R^{m3}$ are preferably identical to each other.

In formula (2) above, $R^{m4}$ is preferably an alkylene group having 1 to 12, 1 to 6 or 1 to 3 carbon atoms, or an arylene group having 6 to 12 carbon atoms, and particularly preferably an alkylene group having 1 to 12, 1 to 6 or 1 to 3 carbon atoms.

In formula (2) above, $Y^2$ is preferably an ether bond, an amide bond, an ester bond, N(H), or N $(COCH_3)$, and particularly preferably an ether bond, an amide bond, or an ester bond.

In formula (2) above, "a", "b", and "c" are preferably each independently an integer of 0 to 2, and particularly preferably 0 or 1.

In formula (3) above, each of $R^{m5}$ to $R^{m7}$ is independently a hydrogen atom or an alkyl group, preferably a

hydrogen atom or an alkyl group having 1 to 12, 1 to 6 or 1 to 3 carbon atoms, and particularly preferably a hydrogen atom. $R^{m5}$ to $R^{m7}$ are preferably identical to each other.

In formula (3) above, $R^{m8}$ is preferably an alkylene group having 1 to 12, 1 to 6 or 1 to 3 carbon atoms, or an arylene group having 6 to 12 carbon atoms, and particularly preferably an alkylene group having 1 to 12, 1 to 6 or 1 to 3 carbon atoms.

In formula (3) above, $Y^4$ is preferably an alkyl group having 1 to 12, 1 to 6 or 1 to 3 carbon atoms, C (O) $CH_3$, C (O) $NH_2$, or N ($COCH_3$).

In formula (2) above, "d" and "e" are preferably each independently an integer of 0 to 2, and particularly preferably 0 or 1.

In one preferred embodiment, $R^{m1}$ , $R^{m2}$, $R^{m3}$ , $R^{m4}$, $Y^1$ , "a", and "b" in Formula (2) above are the same as $R^{m5}$, $R^{m6}$, $R^{m7}$, $R^{m8}$, $Y^3$ , "d" , and "e" in (3) above, respectively.

In the above formula (1) and/or formula (2), the host group represented by $R^Y$ is preferably $\alpha$-cyclodextrin, $\beta$-cyclodextrin, or $\gamma$-cyclodextrin. The guest group represented by $R^Z$ is preferably an alkyl group which may have a substitute or an aryl group which may have a substituent.

to $R^5$ are each independently a hydrogen atom or an alkyl group, a cycloalkyl group, an alkenyl group, an alkoxy group, a cycloalkoxy group, a hydroxy group, a carboxyl group, an aldehyde group, an aryl group, or an aryloxy group, and are more preferably an alkyl group, a cycloalkyl group, an alkenyl group, an alkoxy group, a cycloalkoxy group, a hydroxy group, a carboxyl group, an aldehyde group, an aryl group, or an aryloxy group, and are particularly preferably an alkyl group, a cycloalkyl group, or an aryl group, and are most preferably an aklyl group. The alkyl group as $R^1$ to $R^5$ preferably has 1 to 10, more preferably 1 to 6, particularly preferably 1 to 3, and most preferably 1 to 2 carbon atoms.

In formula (1) and/or formula (2) described above, with regard to $R^Y$ and $R^Z$, reference may be made to the above description for the host group and guest group in the present disclosure.

In formula (1) and/or formula (2) above, $R^1$ , $R^2$ , $R^3$, $R^4$ and $R^5$ are preferably a methyl group or a phenyl group which may have a substituent, and more preferably a methyl group. When $R^1$ , $R^2$ , $R^3$, $R^4$ and $R^5$ are a methyl group, solubility in a nonpolar solvent such as hydrocarbon oil or silicone oil is further improved.

In formula (1) and/or formula (2) above, from the viewpoint of easier synthesis, $R^6$ is preferably a group represented by $-R^{R1}$-COOH or a group represented by $-R^{R2}$-COO-$R^{R3}$, and these groups may have a substituent, and $R^{R1}$, $R^{R2}$, and $R^{R3}$ are each an alkyl group or an alkylene group having 1 to 10 carbon atoms. Each of $R^{R1}$, $R^{R2}$, and $R^{R3}$ may be an alkyl group or an alkylene group having 1 to 8 carbon atoms, 1 to 6 carbon atoms, or 1 to 3 carbon atoms.

In particular, in formula (1) and/or formula (2) described above, $R^1$ to $R^5$ may be a methyl group, and/or $R^6$ may be a group represented by $-R^{R1}$-COOH or a group represented by - $R^{R2}$-COO-$R^{R3}$.

Resin materials according to the present disclosure may bring about excellent physical properties such as improved durability, due to self-repairing property based on the host-guest interaction. Without wishing to be bound by theory, it is considered that, for example, when the resin material according to the present disclosure is used as a film, the polymer compounds reversibly re-bind via a host-guest interaction to close a scratch (including a minute scratch which cannot be visually observed) of the film, and as a result, the durability of the resin material is further improved.

In one preferred embodiment according to the present disclosure, in formula (1) and/or formula (2) above, k=0 and $R^1$ to $R^3$, $R^5$, and $R^6$ are an alkyl group. In this case, a resin material having particularly excellent self-repairing property is obtained, which is preferable. Without wishing to be bound by theory, it is considered that when the Si atom constituting the main chain or a side chain of the polymer compound having a host group is modified with an alkyl group, the compatibility between the polymer compound having a host group and the polymer compound having a guest group is improved as compared with a case where the polymer compound is modified with a substituent having a relatively high polarity, leading to facilitation of the bonding (re-bonding) based on the host-guest interaction, so that the self-repairing property of the resin material is further improved.

In particular, in formula (1) and/or formula (2) above:
k=0; $R^1$ to $R^3$ and $R^5$ are a methyl group; and $R^6$ is an alkyl group having two or more carbon atoms, more preferably an alkyl group having 4 or more carbon atoms, still more preferably an alkyl group having 4 to 30 carbon atoms, 4 to 24 carbon atoms, 4 to 18 carbon atoms, 4 to 12 carbon atoms, or 4 to 8 carbon atoms, and especially a pentyl group. In this case, a resin material having particularly excellent self-repairing property can be obtained.

In the above formula (1) and/or formula (2), from the viewpoint of easier synthesis, "p" and/or "q" are preferably 1 to 3, and more preferably 1 or 2, respectively.

Preferably, $X^1$ and $X^2$ are each independently Si $(OH)_2$, N (H), or N ($COCH_3$), an amide bond, or an ester bond, or a carbonyl group, an alkylene group, a cycloalkylene group, or an arylene group, and more preferably N (H) or N ($COCH_3$), an amide bond, or an ester bond, or an alkylene group.

$R^{10}$ is preferably a hydrogen atom or an alkyl group, cycloalkyl group, carboxyl group, aldehyde group, aryl group, more preferably a hydrogen atom or an alkyl group, a cycloalkyl group, an aryl group, and particularly preferably a hydrogen atom or an alkyl group. When $R^{10}$ is an alkyl group, it has preferably 1 to 10, more preferably 1 to 6, and particularly preferably 1 to 3 carbon atoms.

In formula (1) and/or formula (2) above, from the viewpoint of easier synthesis, $X^1$ is preferably an alkylene group having 1 to 10 carbon atoms, N ($COCH_3$), an amide bond, or a carbonyl group. When $X^1$ is an alkylene group, it has preferably 1 to 6, more preferably 1 to 4, and particularly preferably 1 to 2 carbon atoms.

In formula (1) and/or formula (2) above, preferably, $(X^1)_p$ is $R^{P1}$-N($COCH_3$) or $(CH_2)_2$-N ($COCH_3$). Further, in formula (1) and/or formula (2) above, particularly preferably, -$(X1)_p$-$R^Y$ is represented by -$R^{P1}$-N($COCH_3$)-$R^Y$. $R^{P1}$ is an alkylene group which may have a substituent, and preferably has 1 to 10, more preferably 1 to 6, and particularly preferably 1 to 3 carbon atoms. $R^{P1}$ preferably does not have a substituent. Particularly preferably, in formula (1) and/or formula (2) above, $(X^1)_p$ is $(CH_2)_3$-N ($COCH_3$).

From the viewpoint of easier synthesis, in formula (1) and/or formula (2) above, $X^2$ is preferably an alkylene group having 1 to 12 carbon atoms which may have a substituent, an amide bond, or a carbonyl group. When $X^2$ is an alkylene group, it has preferably 1 to 8, more preferably 1 to 6, and particularly preferably 1 to 3 carbon atoms.

In formula (1) and/or formula (2) above, $(X^2)_q$ is particularly preferably -$R^{11}$-CO-O- or - $R^{11}$-CO-N(H)-. Further, in formula (1) and/or formula (2) above, particularly preferably, -$(X^2)_q$-$R^Z$ is represented by-$R^{11}$-CO-O-$R^Z$, or -CO-N (H)-$R^Z$. $R^{11}$ is an alkylene group having 1 to 12 carbon atoms which may have a substituent, and preferably has 1 to 10, more preferably 1 to 6, particularly preferably 2 to 4, and most preferably 3 carbon atoms. R preferably does not have a substituent.

In formula (1) and/or formula (2) above, particularly preferably,

$(X^1)_p$ is -$(CH_2)_3$-N($COCH_3$)-, and j is an integer of 1 or more,
and/or
$(X^2)_q$ is -$R^{11}$-CO-O- or -$R^{11}$-CO-NH-, wherein $R^{11}$ is an alkylene group having 1 to 12 carbon atoms which may have a substituent, and particularly an alkylene group having 3 to 6 carbon atoms, and k is an integer of 1 or more.

From the viewpoint of easier synthesis, in formula (1) and/or formula (2) above, when at least one of $X^1$ and $X^2$ is represented by Si$(R^{10})_2$,$R^{10}$ is preferably a hydrogen atom, a methyl group, or a phenyl group, particularly preferably a hydrogen atom or a methyl group, and most preferably a methyl group.

The value of "n" may be an integer of 5 or more, 10 or more, 20 or more, or 50 or more, and/or may be an integer of 1000 or less, 500 or less, 250 or less, 200 or less, 150 or less, or 100 or less.

With respect to formula (1) to (3) above, examples of the alkyl group include an alkyl group which may have a substituent, a linear, branched or cyclic alkyl group of C1 to C18. Specific examples thereof include an alkyl group such as methyl, ethyl, n-propyl, isopropyl, n-butyl, isobutyl, sec-butyl, tert-butyl, pentyl, cyclopentyl, hexyl, cyclohexyl, isohexyl, dodecyl, octadecyl, and adamantyl. Examples of the alkylene group include a linear, branched or cyclic alkylene group of C1 to C18, such as methylene, ethylene, n-propylene, isopropylene, n-butylene, and isobutylene.

With respect to formula (1) to (3) above, the aryl group includes an aryl group which may have a substituent, and specific examples thereof include an aryl group having a single ring or two or more rings, and specific examples thereof include phenyl, tolyl, xylyl, naphthyl, anthryl, and phenanthryl. Examples of the arylene group include an arylene group having a single ring or two rings, and a phenylene group.

With respect to formulas (1) to (3) above, the alkenyl group includes a linear or branched alkenyl group having 2 to 20 carbon atoms, such as vinyl, 1-propen-1-yl, 2-propen-1-yl, isopropenyl, 2-buten-1-yl, 4-penten-1-yl, and 5-hexen-1-yl.

With respect to formula (1) to (3) above, the alkoxy group includes an alkoxy group having 1 to 10 carbon atoms, for example, a methoxy group, an ethoxy group, a propoxy group, an isopropoxy group, a butoxy group, an isobutoxy group, a sec-butoxy group, a pentyloxy group, and a hexyloxy group.

With respect to formula (1) to (3) above, the substituent includes an alkyl group such as a methyl group and ethyl group, a halogen atom, a carboxyl group, an ester group, an amide group, and a hydroxy group.

(Ratio of each constituting unit which constitutes the polyorganosiloxane structure)

In formula (1) or formula (2) above, for each constitutional unit which is indicted by "h", "i", "j", and "k", respectively, the ratio of each constitutional unit $P_h$, $P_i$, $P_j$, and $P_k$ to the sum of all of the constitutional units constituting the structure represented by formula (1) or formula (2) described above can be defined as follows, respectively:

$$P_h=100*h/(h + i + j + k)$$

$$P_i=100* i/(h + i + j + k)$$

$$P_j=100*j/(h+i+j+k)$$

$$P_k=100*k/(h+i+j+k).$$

$P_h$, $P_i$, $P_j$, and $P_k$ represent a ratio of the number of moles of each constitutional unit, which are each indicated by "h", "i", "j", or "k", to the total number of moles of all constitutional units constituting the structure represented by formula (1) or formula (2) described above.

The value of $P_h$ may be 70 mol% to 100 mol%, preferably 90 mol% to 100 mol%, more preferably 95 mol% to 98 mol%, and still more preferably 96 mol% to 97 mol%.

The value of $P_i$ may be 0 mol% to 30 mol%, preferably 0 mol% to 20 mol%, more preferably 0.5 mol% to 10 mol%, and still more preferably 1 mol% to 5 mol%.

The values of $P_j$ may be 0.01 mol% to 25 mol%, 0.05 mol% to 10 mol%, 0.1 mol% to 5 mol%, or 0.1 mol% to 2 mol%. Preferably, the value of Pj is 0.1 mol% to 0.9 mol%, 0.2 mol% to 0.8 mol%, 0.3 mol% to 0.7 mol%, or 0.4 mol% to 0.6 mol%, in which case a membrane or a film-shaped resin material may have particularly good elasticity.

The values of $P_k$ may be 0.01 mol% to 25 mol%, 0.05 mol% to 10 mol%, 0.1 mol% to 5 mol%, or 0.5 mol% to 3 mol%.

The values of $P_h$, $P_i$, $P_j$, and $P_k$ can be calculated from the amount of the charge of the raw materials used to produce each of the constituent units indicted by "h", "i", "j", and "k", respectively, and the $^1$H-NMR measurement data for the polymer compound.

(Positions of host group and guest group)

In one embodiment of the resin material according to the present disclosure,

the polymer compound having a host group contained in the resin material has the host group in a side chain of the polymer, and
the polymer compound having a guest group contained in the resin material has the guest group in a side chain of the polymer.

In another embodiment of the resin material according to the present disclosure,

the polymer compound having a host group contained in the resin material has the host group in a side chain of the polymer, and
the polymer compound having a guest group contained in the resin material has the guest group at a terminal of the polymer.

In still another embodiment of the resin material according to the present disclosure,

the polymer compound having a host group contained in the resin material has the host group at a terminal of the polymer and
the polymer compound having a guest group contained in the resin material has the guest group in a side chain of the polymer.

(Polymer compound having no siloxane bond)

In one embodiment according to the present disclosure, the polymer compound having a host group or the polymer compound having a guest group contained in the resin material does not include a siloxane bond. In this embodiment, a polymer compound containing no siloxane bond (hereinafter, also referred to as a "non-siloxane polymer compound") includes, for example, a polymer and a copolymer of at least one monomer selected from a vinyl compound, an acrylic compound, an olefin, a styrene, an acrylic ester, and a methacrylic ester; and a block copolymer containing these polymers and copolymers. Examples thereof include a vinyl resin, an acrylic resin, a urethane resin, an epoxy resin, a polyimide resin, a polyester resin, or a polycarbonate resin. These resins may have a substituent other than the host group and/or guest group. With regard to the polymer compound having a guest group and/or host group and containing no siloxane bond, reference can be made to the description of Patent Document 1.

(Combination of polymer compounds contained in resin material)

For example, the resin material according to the present disclosure may have polymer compounds of any of the following (i) to (iv):

(i) A non-siloxane polymer compound having a host group, and a siloxane polymer compound having a guest group;
(ii) A siloxane polymer compound having a host group, and a non-siloxane polymer compound having a guest group;
(iii) A siloxane polymer compound having a host group, and a siloxane polymer compound having a guest group;
(iv) A siloxane polymer compound having a host group and a guest group.

(Ratio of host and guest)

When the resin material contains a polymer compound having a host group and a polymer compound having a guest group, the respective content ratios in the resin material are not particularly limited. For example, the content of the polymer compound having a host group may be 10 to 90 % by mass, and the content of the polymer compound having a guest group may be 90% by mass to 10% by mass, based on the total of the polymer compound having a host group and the polymer compound having a guest group.

The ratio of the amount of the host group and the amount of the guest group contained in the resin material is not particularly limited. The molar ratio of the host group and the guest group contained in the resin material may be from 0.1:1 to 1:0.1. Alternatively, in the resin material, the polymer compound having a guest group may be contained in an amount of 1 parts by mass or more, 10 parts by mass or more, or 20 parts by mass or more, and/or may be contained in an amount of 1000 parts by mass or less, 250 parts by mass or less, or 100 parts by mass or less, based on 100 parts by mass of the polymer compound having a host group.

<<Preparation of polymer compound>>

(Preparation of polymer compound: non-siloxane polymer compound having host group)

The polymer compound having a host group and containing no siloxane bond (i.e., the non-siloxane polymer compound having a host group) can be prepared by a known method, and can be prepared, for example, by a method described in Patent Document 1.

(Preparation of polymer compound: non-siloxane polymer compound having guest group)

The polymer compound having a guest group and containing no siloxane bond (i.e., the non-siloxane polymer compound having a guest group) can be prepared by a known method, and can be prepared, for example, by a method described in Patent Document 1.

(Preparation of polymer compound: polymer compound having host group and containing siloxane bond)

The siloxane polymer compound having a host group can be prepared, for example, by a method comprising the following steps:

(i) a step of providing a polymer, in which a polymer compound having a siloxane bond (a siloxane polymer compound) is provided,
(ii) a step of providing a host group precursor, in which a host group precursor compound is provided,
(iii) a step of host group addition reaction, in which the siloxane polymer compound and the host group precursor compound are reacted in the presence of a metal catalyst to obtain a siloxane polymer compound having a host group.

(Step of providing a polymer)

In the step of providing a polymer, a polymer compound having a siloxane bond (siloxane polymer compound) is provided. The polymer compound having a siloxane bond is preferably a polyorganosiloxane. The polymer compound having a siloxane bond preferably has a structure suitable for reacting with the host group precursor compound, and has, for example, a hydrogen atom directly bonded to Si.

The siloxane polymer compound provided in the step of providing a polymer may be for example an SiH-containing silicone, and specifically, for example, a polymer having a structure represented by the following formula (4):

[Chem 7]

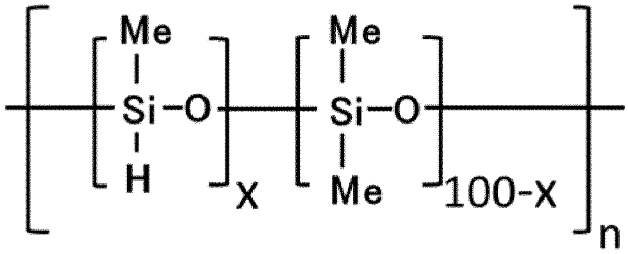

··· (4)

[In formula (4), x represents an integer of 1 or more; n represents an integer of 1 or more].

In formula (4) above, "x" may be 2 or more, 5 or more, 10 or more, or 20 or more, and/or may be 95 or less, 90 or less, 75 or less, or 50 or less. In formula (4) above, "n" may be 5 or more, 10 or more, or 50 or more, and/or may be 1000 or less, 500 or less, 250 or less, 100 or less, or 75 or less.

(Step of providing a host group precursor)

In the step of providing a host group precursor, a host group precursor compound is provided. The host group precursor compound preferably has a linker structure for binding to a polymer compound having a siloxane bond. Examples of the host group precursor compound include a cyclodextrin having a linker structure. Examples of the linker structure include a vinyl group, and a particular example thereof include a group represented by the following formula ($X_L$):

$$C(H)_2=C(H)-C(H)_2-N(COCH_3)-* \cdots \qquad (X_L)$$

[In formula ($X_L$), * represents a single bond to a cyclodextrin.]

(Step of host group addition reaction)

In the step of host group addition reaction, the siloxane polymer compound and the host group precursor compound are reacted in the presence of a metal catalyst to obtain a siloxane polymer compound having a host group. For example, a siloxane polymer compound having a hydrogen atom directly bonded to Si of the main chain of the polymer may be reacted with a cyclodextrin having a vinyl group as a linker structure in the presence of a metal catalyst, in order to obtain a siloxane polymer compound in which the cyclodextrin is bonded to the Si atom of the main chain of the polymer via the linker structure.

Preferably, after the reaction for adding the host group, the hydrogen atoms directly bonded to the Si atoms in the polymer compound are substituted. This further improves the chemical stability of the resulting resin material. Examples of the compound usable for this substitution include an acrylic ester or an alkene having two or more carbon atoms. The alkene having two or more carbon atoms is preferable because the resulting resin material has particularly excellent self-repairing property. Among the alkenes having two or more carbon atoms, an alkene having 5 or more carbon atoms is more preferable, and an alkene having 5 to 30 carbon atoms, 5 to 24 carbon atoms, 5 to 18 carbon atoms, 5 to 12 carbon atoms, or 5 to 8 carbon atoms is further preferable, and 1-pentene is particularly preferable.

(Metal catalyst)

Examples of the metal catalyst used in the step of host group addition reaction described above include platinum (Pt).

(Preparation of a polymer: Preparation of polymer compound having guest group and containing siloxane bond)

The siloxane polymer compound having a guest group can be produced, for example, by a method comprising the following steps:

(i) a step of providing a polymer, in which a polymer compound having a siloxane bond (siloxane polymer compound) is provided,
(ii) a step of providing a guest group precursor, in which a guest group precursor compound is provided,
(iii) a reaction step, in which the siloxane polymer compound and the guest group precursor compound are reacted

in a solvent to obtain a siloxane polymer compound having a guest group.

(Step of providing a polymer)

In the step of providing a polymer, a polymer compound having a siloxane bond having a carboxyl group is provided. The polymer compound having a siloxane bond is preferably a polyorganosiloxane. The polymer compound having a siloxane bond, which is provided in the step of providing a polymer, preferably has a structure suitable for reacting with the guest group precursor compound so as to form a siloxane polymer compound having a guest group, and has, for example, a carboxyl group which is bonded to Si of the main chain of the polymer via an alkylene group having 1 to 12 carbon atoms.

(Step of providing a guest group precursor)

In the step of providing a guest group precursor, a guest group precursor compound is provided. The guest group precursor compound preferably has a linker structure for binding to the polymer compound having a siloxane bond. Specific examples of the guest group precursor compound include an adamantyl having a linker structure. Examples of the linker structure include an amino group.

(Reaction step)

In the reaction step, the siloxane polymer compound and the guest group precursor compound are reacted in a solvent to obtain a siloxane polymer compound having a guest group. For example, a siloxane polymer compound having a carboxyl group bonded to Si of the main chain of the polymer via an alkyl group may be reacted with an adamantyl having an amino group as a linker structure, in a solvent in the presence of a condensing agent, in order to obtain a siloxane polymer compound having a guest group. In this case, the siloxane polymer compound having a guest group has a structure in which the adamantyl is bonded via a linker structure to Si atom constituting the main chain of the siloxane polymer compound. Examples of the condensing agent include 1-hydroxybenzotriazole (HOBt; Tokyo Chemical Industry Co., Ltd., H0468, Cas:80029-43-2) and N,N'-dicyclohexylcarbodiimide (DCC; Nacalai Tesque, INC., 11913-52, Cas:538-75-0).

(Preparation of polymer compound: siloxane polymer compound having host group and guest group)

The siloxane polymer compound having a host group and a guest group can be obtained, for example, by polymerizing a siloxane polymer compound having a host group, which is prepared by the above method, and a siloxane polymer compound having a guest group, which is produced by the above method, in order to form a block copolymer.

(Preparation of polymer compound: Preparation of polymer compound having host group and/or guest group and siloxane bond)

The polymer compound having a host group and/or guest group and a siloxane bond can also be prepared, for example, by subjecting a monomer represented by the following formula (5) and a monomer represented by the formula (6) to a polymerization reaction. The specific embodiment of the polymerization reaction is not particularly limited, and a known method can be used.

[Chem 8]

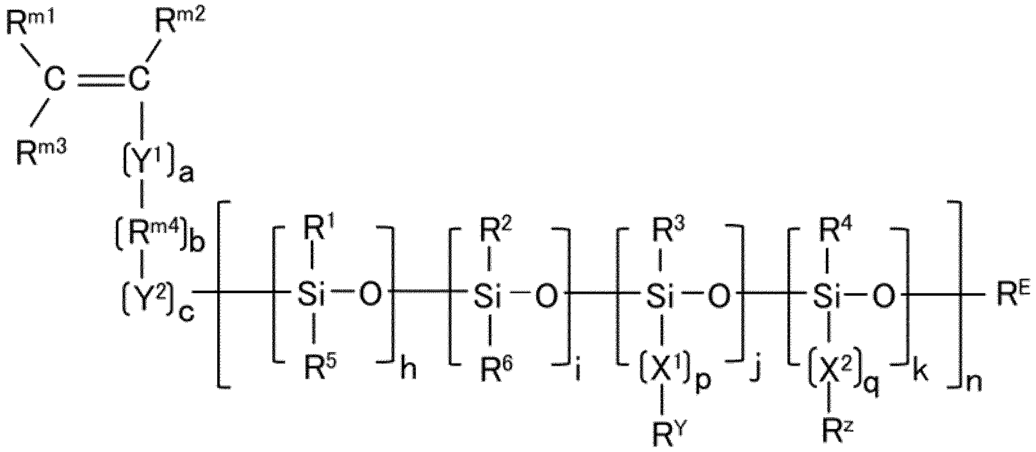

• • • (5)

[Chem 9]

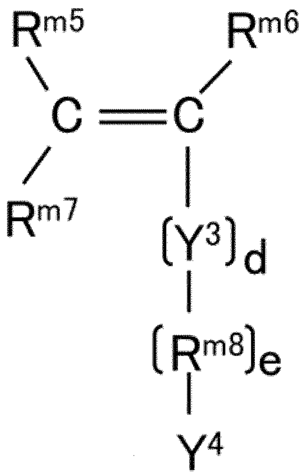

• • • (6)

For each symbol in formula (5) and formula (6) described above, reference may be made to the description of each symbol in formula (2) and formula (3) described above. Note that $R^E$ represents a terminal group. With regard to $R^E$, it is also possible to refer to the above-mentioned descriptions.

(Cross-linking)

In one embodiment of the resin material according to the present disclosure, at least one of the polymer compound having a host group and the polymer compound having a guest group, or the polymer compound having a host group and a guest group, is cross-linked. The cross-link may be, for example, a cross-link through a bond other than the host-guest interaction, such as a cross-link through a covalent bond (e.g., siloxane cross-linking).

For example, the polymer compound having a host group may form a host body by being cross-linked, and/or the polymer compound having a guest group may form a guest body by being cross-linked.

As for a method for cross-linking a polymer compound and as for a cross-linking agent, a known method and a known agent may be used, depending on the type of the polymer compound. The cross-link may be formed, for example, by light irradiation. Examples of the cross-linking agent include N,N'-methylenebisacrylamide (MBAAm), and ethylene glycol dimethacrylate (EDMA).

<<Manufacture of resin material>>

The resin material according to the present disclosure can be produced, for example, by individually preparing a polymer compound having a host group and a polymer compound having a guest group, respectively, and mixing the

obtained polymer compound having a host group and polymer compound having a guest group. When mixing the polymer compound having a host group and the polymer compound having a guest group, for example, they may be mixed in a state in which both of them are solid; they may be mixed in a state in which one or both of them is liquid; or they may be mixed in a state in which one or both of them is in a solution. It is also possible that a polymer compound of a solid state is added to a solution of the other polymer compound.

The condition for mixing the polymer compound having a host group and the polymer compound having a guest group is not particularly limited. For example, suitable temperature at the time of mixing, mixing time, and a means for mixing, etc., are selected accordingly.

In one embodiment of the resin material according to the present disclosure, the resin material is in the form of a paste at room temperature. By selecting a polymer compound which is in the form of a paste at room temperature as the polymer compound contained in a resin material, a resin material in the form of a liquid can be obtained. Alternatively, a liquid resin material may be obtained by dissolving a polymer compound in a solvent. A resin material which is liquid at room temperature is particularly preferred because it can be relatively easily formed in to a film.

Examples of the polymer compound which is liquid at room temperature include a polymer compound having a polyorganosiloxane in the main chain thereof, in particular a dimethylpolysiloxane.

The solvent for dissolving the polymer compound is not particularly limited, and examples thereof include silicone oil and hydrocarbon oil. Examples of the silicone oil include one or two or more selected from octamethylcyclotetrasiloxane, decamethylcyclopentasiloxane, dodecamethylcyclohexasiloxane, dimethylpolysiloxane, and caprylylmethicone, and more preferably one or two or more selected from decamethylcyclopentasiloxane and dimethylpolysiloxane, and further preferably dimethylpolysiloxane having a degree of polymerization of 10 or less. Examples of the hydrocarbon oil include hydrogenated polyisobutene and isododecane, and isododecane is preferred.

The polymer compounds contained in the resin material according to the present disclosure may be bonded to each other by a host-guest interaction, or may not be bonded to each other by a host-guest interaction.

The resin material can be formed into a film. If the resin material is in the form of a film, it can be used in various applications used in the form of a membrane, a film, etc. When the resin material is in the form of a film, there is no particular limitation on the thickness thereof, and an appropriate thickness can be selected depending on the application. For example, the resin material thickness may be adjusted to 1 nm to 1 cm, and, from the viewpoint of better film formability, may be adjusted to 1 μm to 100 μm.

When the resin material is in the form of a film, a covalent bond may be formed between the resin material and the substrate, etc., on which the resin material is disposed. Specifically, a resin material in the form of a film may form a covalent bond with a functional group present on the surface of the substrate. In this case, the adhesive force (adhesion) between the resin material in the form of a film and the substrate can be improved.

(Shaping)

There is no particular limitation on the method of shaping the resin material into a film, and for example, a known film forming method can be widely used. For example, a solution or dispersion of a polymer compound constituting the resin material can be prepared, and the resin material in the form of a film can be formed from this solution or dispersion by various filmforming means such as a coating method, a casting method, or a spin coating method. There is no particular limitation on the solvent for preparing the solution or dispersion, and water, alcohol, etc., or an organic solvent such as toluene, etc., can be widely used.

When the resin material is shaped into a film, a method of forming the film may in particular include the following steps:

preparing a host solution by dissolving a polymer compound having a host group in a solvent
preparing a host-guest solution by adding a polymer compound having a guest group to the host solution, and
applying this host-guest solution to a target object and drying it to form a film.

In the above method, alternatively, a host-guest solution may be prepared by dissolving a polymer compound having a guest group in a solvent to prepare a guest solution and then by adding a polymer compound having a host group to the guest solution.

Alternatively, the method of forming a film may in particular include the following steps:

preparing a mixture by mixing a polymer compound having a host group, which is in the form of a paste or liquid, with a polymer compound having a guest group, which is in the form of a paste or liquid, and
applying this mixture to a target object to form a film.

It is also possible that only one of the polymer compound having a host group and the polymer compound having a

guest group is in a paste state or a liquid state.

(Additives)

The resin material of the present disclosure may include a polymer compound other than the polymer compound having a host group and the polymer compound having a guest group or the polymer compound having a host group and a guest group, as long as the effect of the present invention is not inhibited. For example, for the purpose of improving the mechanical and chemical properties of a specific polymer compound, the polymer material according to the present invention can be physically contained in the specific polymer compound. Examples of such a specific polymer compound include a (meth) acrylic resin (acrylic polymers), a polyesterbased resin, an alkyd resin, a polystyrene resin, a melamine-formaldehyde resin, a polyisocyanate-based resin, an epoxy-based resin, a vinyl chloride-based resin (e.g., vinyl chloride-vinyl acetate copolymer), a ketone resin, a petroleum resin, and an organic resin such as polyethylene and polypropylene and chloride of these polyolefins; inorganic resins such as silica gel and silicic acid; a fluororesin obtained by polymerizing fluoroolefins, fluorine rubber, fluorine paint, fluorine repellent, fluorine coating agent, etc.

EXAMPLES

Hereinafter, the invention according to the present disclosure will be described more specifically by way of Examples.

<<Measuring method>>

The measurements were performed by the following methods.

<$^1$H-NMR>

Nuclear magnetic resonance (NMR) spectra were recorded using ECA500 (JEOL, Ltd.) as an instrument. Measurements were performed at 25°C. Deuterated chloroform was used as the solvent. NMR chemical shifts were recorded in ppm (parts per million) relative to the residual solvent peak at 7.26 ppm (chloroform).

(IR)

Fourier-transform infrared spectra were measured by a FT/IR 6100 spectrometer (JASCO Corporation) in the range of 500 $cm^{-1}$ to 4000 $cm^{-1}$.

(MALDI-TOF MAS)

MALDI-TOF MS spectra were measured using autoflex maX LRF (Bruker) as an instrument.

<Elemental analysis>

Elemental analysis was performed using an elemental analyzer (manufactured by Yanako Analytic Systems Inc., CHN coder) based on the differential thermal conductivity method.

<Preparation of compound>

[Chem 10]

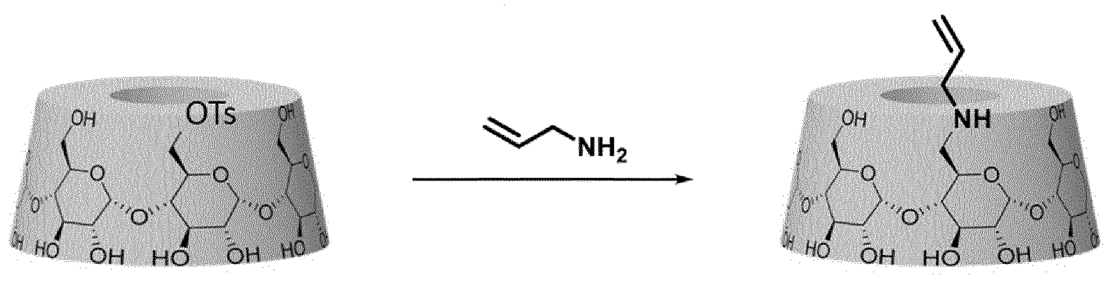

Compound 0 Compound 1

<Production example 1: Preparation of compound 1>

Compound 1 was prepared according to the following method:
Compound 0 (β-cyclodextrin-OTs; C-6 monotosylate d-β-CD) was prepared according to the process described in Tetrahedron Letters, Vol. 25, No. 31, 3331-3334, 1984.
A 30.0 g (23.28 mmol) of Compound 0 was dissolved in 300 g (5.25 mol) of allylamine, and then refluxed overnight. Then, the reaction solution was dried under reduced pressure on an evaporator to obtain a dry matter. The resulting dry matter was dissolved by adding it to 600 mL of acetonitrile. Then, the precipitate in the solution was collected by suction filtration, and dissolved by adding it to 600 mL of acetonitrile. Then, the precipitate in the solution was collected by suction filtration and dried under reduced pressure in a vacuum oven at 100 °C overnight to obtain Compound 1.
The production of obtained compound 1 was confirmed by MALDI-TOFMS, $^{1}$H-NMR, and elemental analyses.

[Chem 11]

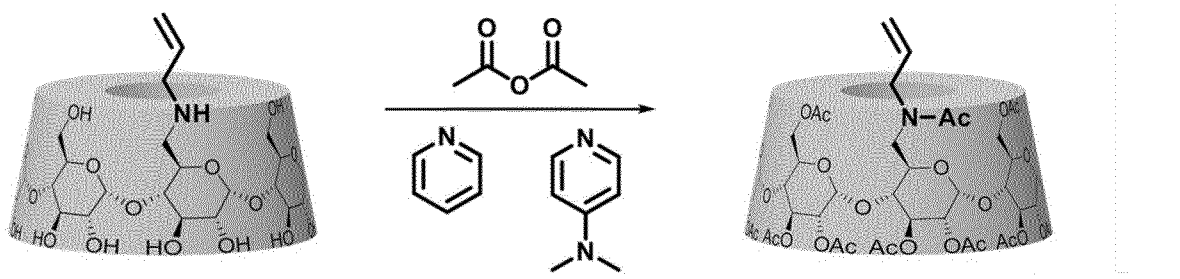

Compound 1 Host precursor compound 2

<Production example 2: Preparation of host precursor compound 2>

Host precursor compound 2 was prepared according to the following method:
To 20 g (17.0 mmol) of compound 1 obtained by the above method, 300 mL (300g, 3.8 mol) of dry pyridine and 170 mL (184 g, 1.8 mol) of acetic anhydride were added, and the mixture was stirred at 70°C overnight. Then, 60 mL of methanol was added dropwise while cooling the reaction solution with ice. Then, the reaction solution was dried under reduced pressure on an evaporator to obtain a dry matter. The resulting dry matter was dissolved in 100 mL of acetone and added dropwise to 2 L of water. Then, the precipitate in the solution was collected by suction filtration, and a solution obtained by dissolving the precipitate in 100 mL of acetone was added dropwise to 1.5 L of water. Then, the precipitate in the solution was collected by suction filtration and dried in a vacuum oven at 70 °C for one day under reduced pressure to obtain host precursor compound 2.
The production of host precursor compound 2 was confirmed by MALDI-TOFMS, $^{1}$H-NMR, and elemental analyses.

[Chem 12]

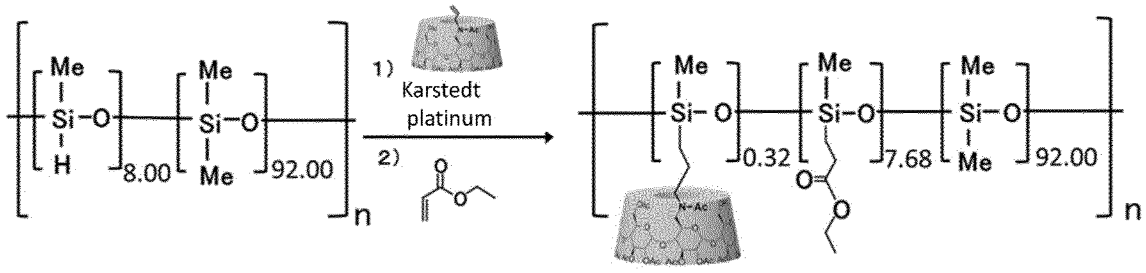


Polymer compound H1

<Production example 3: Preparation of Polymer compound H1 having host group>

Polymer compound H1 having a host group was prepared according to the following method:
A 1.8 g (0.9 mmol) of host precursor compound 2 was dissolved in 400 ml of toluene, and after nitrogen substitution, it was stirred at 105 °C. To this solution, a solution prepared by adding 12.0 g (14.4 mmol) of methyl hydrogen polysiloxane (kinematic viscosity 20 $mm^2/s$, effective hydrogen content 7.5 mol%) and 165 μL of a karstedt platinum solution in 400 ml of toluene was added dropwise over a period of 1 hour. Incidentally, the karstedt platinum solution was prepared using a platinum(0)-1,3-divinyltetramethyldisiloxane complex (19.0 % to 21.5 % as Pt, manufactured by TCI, P2075, Cas:68478-92-2, Product Code :P2075). The weight of Pt used was 28.5 mg. Four hours after completion of the dropwise addition, 4.8 g (48 mmol) of ethyl acrylate (Cas: 140-88-5, manufactured by Tokyo Chemical Industry Co., Ltd.) was added by a syringe. Of the obtained reaction solution, 10 g thereof was dissolved in 114 ml of isododecane (MARUKASOL R, Maruzen Petrochemical Co., Ltd.). The remaining unreacted CD (0.499 g) was removed by extraction into ethyl acetate, in order to obtain polymer compound H1 having a host group, which was dissolved in isododecane.
The production of obtained polymer compound H1 was confirmed by analysis of $^1$H-NMR and IR spectra.
For obtained polymer compound H1, the host group introduction rate measured by $^1$H-NMR was 0.32 mol%.

<Production example 4: Preparation of polymer compound H2 having host group>

Polymer compound H2 having a host group was prepared in the same manner as in the preparation of polymer compound H1 having a host group described above, except that 0.6 g (0.3 mmol) of host precursor compound 2, 4.0 g (0.3 mmol) of methyl hydrogen polysiloxane, and 55 μL of karstedt platinum solution were used.
For obtained polymer compound H2, the host group introduction rate measured by $^1$H-NMR was 0.31 mol%.

<Production example 5: Preparation of polymer compound H3 having host group>

Polymer compound H3 having a host group was prepared in the same manner as in the preparation of polymer compound H1 having a host group described above, except that 4.0 g (4.8 mmol) of host precursor compound 2, 4.0 g (4.8 mmol) of methyl hydrogen polysiloxane, and 55 μL of a karstedt platinum solution were used, and that the solvent amount was adjusted so that the concentration of the main chain silicone was 34.3 mmol.
For obtained polymer compound H3, the host group introduction rate measured by $^1$H-NMR was 0.20 mol%.

<Production example 6: Preparation of polymer compound H4 having host group>

Polymer compound H4 having a host group was prepared in the same manner as in the preparation of polymer compound H1 having a host group described above, except that 2.4 g (1.2 mmol) of host precursor compound 2, 16.0 g (19.2 mmol) of methyl hydrogen polysiloxane, and 220 μL of karstedt platinum solution were used.
For obtained polymer compound H4, the host group introduction rate measured by $^1$H-NMR was 0.37 mol%.

<Production example 7: Preparation of polymer compound H5 having host group>

Polymer compound H5 having a host group was prepared in the same manner as in the preparation of polymer compound H1 having a host group described above, except that 0.6 g (0.3 mmol) of host precursor compound 2, 2.0 g (2.4 mmol) of methyl hydrogen polysiloxane, and 55 μL of karstedt platinum solution were used.

For obtained polymer compound H5, the host group introduction rate measured by $^1$H-NMR was 1.0 mol%.

<Production example 8: Preparation of polymer compound H6 having host group>

Polymer compound H6 having a host group was prepared in the same manner as in the preparation of polymer compound H1 having a host group described above, except that 0.6 g (0.3 mmol) of host precursor compound 2, 4.0 g (4.8 mmol) of methyl hydrogen polysiloxane, and 55 μL of karstedt platinum solution were used.

For obtained polymer compound H6, the host group introduction rate measured by $^1$H-NMR was 0.5 mol%.

[Chem 13]

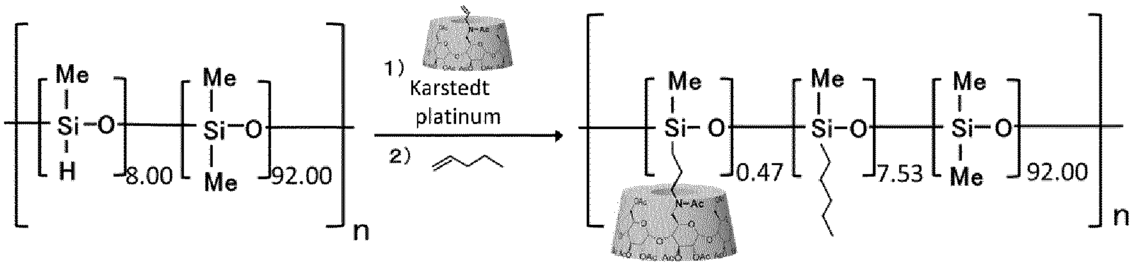


Polymer compound H7

<Production example 9: Preparation of polymer compound H7 having host group>

Polymer compound H7 having host group was prepared according to the following method:
A 1.8 g (0.9 mmol) of host precursor compound 2 was dissolved in 900 ml of toluene, and after nitrogen substitution, it was stirred at 105 °C. To this solution, a solution prepared by adding 12.0 g (11.48 mmol) of methyl hydrogen polysiloxane and 165.0 μL of Karstedt platinum solution in 250 mL of toluene was added dropwise over a period of 30 minutes. Incidentally, the Karstedt platinum solution was prepared using a platinum(0)-1,3-divinyltetramethyldisiloxane complex (19.0 % to 21.5 % as Pt, manufactured by TCI, P2075, Cas:68478-92-2 Product Code :P2075). The weight of Pt used was 28.2 mg and the reagent concentration in the reaction solution was [Pt] = 0.09 mM. After 4 hours from the completion of the dropwise addition, 2.0 g (29.0 mmol) of 1-Pentene (manufactured by Tokyo Chemical Industry Co., Ltd.) was added. Reflux was carried out overnight, and toluene was distilled off by an evaporator, and then dissolved in hexane, and the precipitate was removed by a centrifuge, in order to obtain polymer compound H7 having a host group, which was dissolved in hexane.

The preparation of obtained polymer compound H7 was confirmed by the analysis of $^1$H-NMR and IR spectra.

For obtained polymer compound H7, the host group introduction rate measured by $^1$H-NMR was 0.47 mol%.

<Production example 10: Preparation of polymer compound H8 having host group>

Polymer compound H8 having a host group was prepared in the same manner as in the preparation of polymer compound H7 having a host group described above, except that 3.6 g (1.8 mmol) of host precursor compound 2 was used. The host group introduction rate of the polymer compound H8 was 0.63 mol%.

<Production example 11: Preparation of polymer compound G1 having guest group>

[Chem 14]

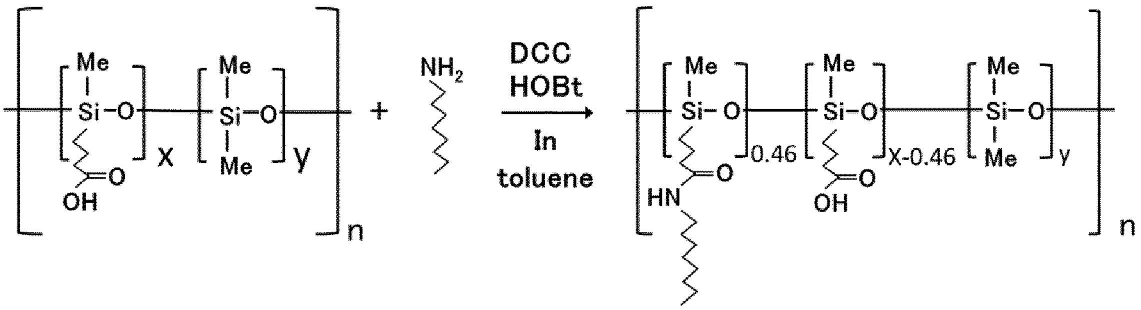


Polymer compound G1

[wherein, x and y are an integer of 0 or more, and x + y = 100.]

Polymer compound G1 was prepared according to the following method:
A 10.0g (1.3 mol) of side-chain type carboxyl-modified silicone oil (manufactured by Shin-Etsu Silicone Co., Ltd., X-22-3701E, carboxyl group equivalent = 4000 g/mol) was dissolved in 100 mL of toluene to obtain solution 1. Then, to this solution 1, 68.24 mg (0.5 mol) of HOBt was added to obtain solution 2. Then, 104.19 mg (0.5 mol) of DCC dissolved in 50 mL of toluene was added to this solution 2 to obtain solution 3. Then, 65.26 mg (0.5 mmol) of N-octylamine (Nacalai Tesque, Inc., 25512-72, Cas:111-86-4) was dispersed in 50 mL of toluene and added to solution 3 to obtain solution 4. This solution 4 was stirred overnight to obtain a clear supernatant and a white precipitate. The white precipitate was removed by filtration to give a clear filtrate. The clear filtrate was washed with saturated aqueous sodium bicarbonate and dehydrated with anhydrous sodium sulfate. Toluene was removed in an evaporator to obtain a colorless transparent oil. This colorless transparent oil was dried in vacuum at 85 °C overnight, in order to obtain polymer compound G1 having a guest group.

The production of obtained polymer compound G1 was confirmed by $^1$H-NMR (500 MHz) measurement.

For obtained polymer compound G1, the guest group introduction rate measured by $^1$H-NMR was 0.46 mol%.

<Production example 12: Preparation of Polymer compound G1' having guest group>

Polymer compound G1' was obtained in a similar way as Production example 11. The guest group introduction rate in obtained polymer compound G1' was 0.51 mol%.

[Chem 15]

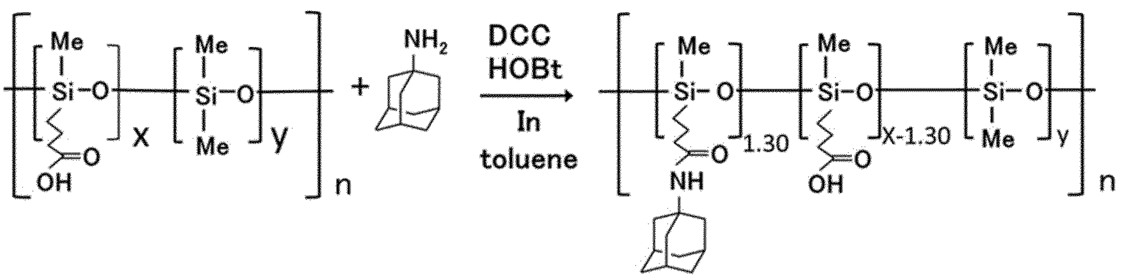


Polymer compound G2

[wherein, x and y are an integer of 0 or more, and x + y = 100.]

<Production example 13: Preparation of Polymer compound G2 having guest group>

Polymer compound G2 having a guest group was prepared in the same manner as in the preparation of polymer compound G1 having a guest group described above, except that 10000 mg (1.3mol) of side-chain type carboxyl-modified silicone oil and 95.7 mg (0.63 mmol) of 1-adamantylamine (manufactured by Fujifilm Waco Pure Chemical Corporation)

were used instead of N-octylamine.

For obtained polymer compound G2 having a guest group, the guest group introduction rate measured by $^1$H-NMR was 1.3 mol%.

<Production example 14: Preparation of polymer compound A2>

[Chem 16]

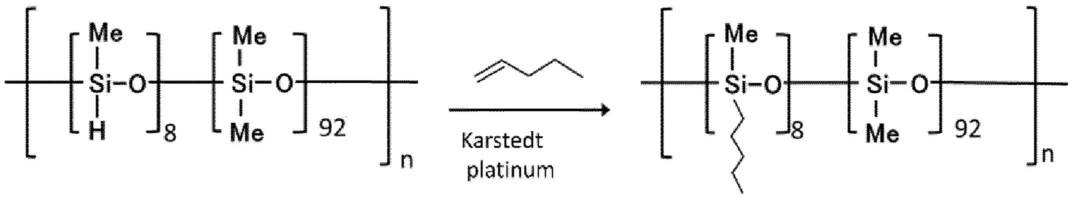


Polymer compound A2

Methyl hydrogen polysiloxane and karstedt platinum solutions, and 1-Pentene (manufactured by Tokyo Chemical Industry Co., Ltd.) were used to produce polymer compound A2.

<Preparation of polymer compound CH-1 having host group>

Polymer compound CH-1 having a polyacrylamide main chain and β-cyclodextrin as a host group was prepared according to the method described in Non-Patent Document 1.

<Preparation of polymer compound CG-1 having guest group>

Polymer compound CG-1 having a polyacrylamide main chain and an adamantyl group as a guest group was prepared according to the method described in Non-Patent Document 1.

<Preparation of polymer compound CH-2 having host group>

Polymer compound CH-2 having a polytetraethylene glycol acrylate main chain and β-cyclodextrin as a host group was prepared according to the method described in Non-Patent Document 2.

<Preparation of polymer compound CG-2 having guest group >

Polymer compound CG-2 having a polytetraethylene glycol acrylate main chain and an adamantyl group as a guest group was prepared, according to the method described in Non-Patent Document 2.

< Preparation of polymer compound CH-3 having host group >

Polymer compound CH-3 having a polyethyl acrylate main chain and β-cyclodextrin as a host group was prepared, according to the method described in Non-Patent Document 3.

< Preparation of polymer compound CG-3 having host group >

Polymer compound CG-3 having a polyethyl acrylate main chain and an adamantyl group as a guest group was prepared, according to the method described in Non-Patent Document 3.

< Preparation of polymer compound CH-4 having host group >

Polymer compound CH-4 having a polyethyl acrylate main chain and γ-cyclodextrin as a host group was prepared, according to the method described in Non-Patent Document 3. Incidentally, the preparation was carried out so that the unit having a host group was 1.0 mol% in the obtained polymer compound.

<<Examples 1 to 8, Comparative examples 1 to 3 and Reference examples 1 to 3>>

Resin materials according to Examples 1 to 8 (Ex.1 to 8), Comparative Examples 1 to 3 (Comp.Ex.1 to 3), and Reference Examples 1 to 3 (Ref. Ex. 1 to 3) were prepared as described below. The obtained resin materials according to Examples 1 to 8, Comparative Examples 1 to 3, and Reference Examples 1 to 3 were evaluated for solubility, film formability, elasticity of a film obtained from a resin material, self-repairing property of a film, etc., as described below.

<Example 1>

Polymer compound H1 having a host group prepared as in Production Example 3 described above and polymer compound G1 having a guest group prepared as in Production Example 11 described above were mixed by the following procedure to obtain the resin material according to Example 1:
10 g of polymer compound H1 having a host group according to Example 1 was dissolved in 100 ml (75 g) of isododecane, subjected to a sonicator treatment at 45 °C for 2 hours, and then allowed to stand for 5 days. The remaining gel-like mass was retrieved and ground in a mortar, during which 14 ml (10.5 g) of isododecane was added. After sonicator treatment at 45 °C for 2 h, centrifugation was performed to separate the supernatant and precipitate. The resulting precipitate was 0.499 g. To the obtained supernatant, 6.30 g of polymer compound G1 having a guest group according to Example 1 was mixed. The ratio of the total of polymer compound H1 and polymer compound G1 to the entire solution was 20.5 wt%.

The solubility of the resin material according to Example 1 in isododecane was particularly good. The result is shown in Table 1 below.

Note that the evaluation of solubility in Table 1 is based on the following evaluation criteria:

Good: 50 % or more of the input polymer compound was dissolved.
Poor: Less than 50 % of the input polymer compound was dissolved.

(Film formability)

The solution of polymer compound H1 having a host group and polymer compound G1 having a guest group dissolved in a solvent was poured into a mold made of Teflon (registered trademark) and dried by hot air to form a film.

Evaluation was performed on the obtained film according to the following criteria:

Good: A film was obtained.
Poor: A film was not obtained.

(Elasticity of film)

For the obtained film, if the film had elasticity, it was evaluated as "Good", and if the obtained film had no elasticity, it was evaluated as "Poor".

(Self-repairing property)

The obtained film was evaluated for its self-repairing property. The self-repairing property of the film was evaluated in the same manner as described later with respect to Example 7.

The evaluation result for Example 1 is shown in Table 1 below.

<Example 2>

Polymer compound H2 having a host group prepared as in Production Example 4 described above and polymer compound G1 having a guest group prepared as in Production Example 11 described above were mixed by the same method as described above with respect to Example 1, in order to obtain the resin material according to Example 2. The solubility of the resin material according to Example 2 in isododecane was good. The result is shown in Table 1 below. In addition, a film was produced from a solution of polymer compound H2 having a host group and polymer compound G1 having a guest group, and the elasticity and self-repairing property of the film were evaluated. The results are shown in Table 1 below.

<Example 3>

Polymer compound H3 having a host group prepared as in Production Example 5 described above and polymer compound G1 having a guest group prepared as in Production Example 11 described above were mixed by the same method as described above with respect to Example 1, in order to obtain the resin material according to Example 3. The solubility of the resin material according to Example 3 in isododecane was particularly good. The result is shown in Table 1 below. In addition, a film was produced from a solution of polymer compound H3 having a host group and polymer compound G1 having a guest group, and the elasticity and self-repairing property of the film were evaluated. The results are shown in Table 1 below.

<Example 4>

Polymer compound H4 having a host group prepared as in Production Example 6 described above and polymer compound G1 having a guest group prepared as in Production Example 11 described above were mixed by the same method as described above with respect to Example 1, in order to obtain the resin material according to Example 4. The solubility of the resin material according to Example 4 in isododecane was particularly good. The result is shown in Table 1 below. In addition, a film was produced from a solution of polymer compound H4 having a host group and polymer compound G1 having a guest group, and the elasticity and self-repairing property of the film were evaluated. The results are shown in Table 1 below.

<Example 5>

Polymer compound H5 having a host group prepared as in Production Example 7 described above and polymer compound G2 having a guest group prepared as in Production Example 13 described above were mixed by the same method as described above with respect to Example 1, in order to obtain the resin material according to Example 5. The solubility of the resin material according to Example 5 in isododecane was particularly good. The result is shown in Table 1 below.

Next, the film according to Example 5 was formed by the following method:

(a) 625 mg of polymer compound H5 having a host group (CD moiety: 61 mmol) and 375 mg of polymer compound G2 having a guest group (Ad moiety: 61 mmol) were dissolved in 9 g of toluene, and 25 g of 3φmm zirconia balls were added.
(b) the ball kneading of the above mixture was performed using the planetary ball mill NP-100 pulverizing nano-taro (manufactured by THINKY, INC.), with a step of MIX/MILL mode/2000 rpm × 30 sec, then a step of MIX/MILL mode/2000 rpm × 5 min × 4 times. Thereafter, the kneaded material was set in the media separation set attached to the above-mentioned machine, and the zirconia balls were removed from the target material with a step of CLEAN MEDIA mode/2000 rpm × 1 min and then a step of MIX/MILL mode/400 rpm × 30 sec.
(c) the above kneaded product solution was poured into a mold (5 cm×5 cm square dish-shape) made of Teflon (registered trademark), and dried in a Windy oven WFO-420 (manufactured by TOKYO RIKAKIKAI CO., LTD.) for 16 hours at 80 °C.

As a result, an elastomer-like film having high elasticity was obtained. A photograph of the resulting film is shown in FIG 1.
Evaluation results of the elasticity and self-repairing property of the film according to Example 5 are shown in Table 1 below.

(Elasticity)

For the film according to Example 5 obtained as described above, the elasticity was evaluated by a tensile test.
Tensile test was performed using a tensile tester AG-X-plus-50N-5kN (manufactured by Shimadzu Corporation) as an instrument.
The result of the tensile test with respect to Example 5 is shown in FIG 2.
As a result of the tensile test for the film according to Example 5, the elastic modulus, expressed as stress (kPa) at 20% strain, was a value near 150 kPa.

<Example 6>

Polymer compound H6 having a host group prepared as in Production Example 8 described above and polymer compound G2 having a guest group prepared as in Production Example 13 described above were mixed by the same

method as described above with respect to Example 1, in order to obtain the resin material according to Example 6. The solubility of the resin material according to Example 6 in isododecane was particularly good. The result is shown in Table 1 below.

The formation of a film was performed by the same procedure as described in the description of Example 5, except that "735 mg of polymer compound H6 having a host group (CD portion: 61 mmol) and 265 mg of polymer compound G2 having a guest group (Ad portion: 61 mmol) were dissolved in 9 g of toluene" in step (a).

As a result, an elastomer-like film having high elasticity was obtained. A photograph of the resulting film is shown in FIG. 3.

Evaluation results of the elasticity and self-repairing property of the film according to Example 6 are shown in Table 1 below.

(Elasticity)

A tensile test was performed on the obtained film of Example 6 to evaluate the elasticity, in the same manner as in Example 5. The result of the tensile test with respect to Example 6 is shown in FIG 4.

As a result of the tensile test for the film according to Example 6, the elastic modulus, expressed as stress (kPa) at 20% strain, was a value near 50kPa.

<Example 7>

Polymer compound H7 having a host group and polymer compound G1 having a guest group were mixed in the following procedure to obtain the resin material according to Example 7:
A total of 2 g of polymer compound H7 and polymer compound G1 were added to 3 ml of isododecane in a molar ratio of 1:1, and the mixture was dissolved by stirring with a stirrer bar for 3 hours at 80 °C. Solubility was evaluated in the same manner as in Example 1. The result is shown in Table 1.

Then, the isododecane solution of polymer compound H7 and polymer compound G1 was poured into a mold of 5 cm × 5 cm made of Teflon (registered trademark), dried in a Windy-oven at 130 °C overnight, and solidified to obtain a film. The resulting film was an elastomer-like film having high elasticity.

(Evaluation of self-repairing property)

The obtained film were evaluated for the self-repairing property as follows:

(1) a film was cut to form a strip-shaped film with a width of 6 mm and a length of 30 mm,

the strip-shaped film was cut in the middle portion to form two fragments,
the two fragments were brought into contact with each other via their respective cut surfaces,
the contacted fragments are sandwiched between Teflon plates arranged on top of one another, and the periphery of the superimposed Teflon plates is secured with clips and
allowed to stand overnight under reduced pressure at 60 °C, in order to obtain a test piece.

(2) both ends of the obtained test piece were grasped by two grips of a tensile tester, respectively, and tensile stress was applied to the test piece along the length of the test piece to measure the energy required for the test piece to break (fracture energy kJ/m3). The test piece was broken at the point where the cut surfaces were connected with each other.
a ratio was calculated relative to the fracture energy measured for a strip-shaped film which was not subjected to the cutting treatment, in order to calculate the repairing rate according to Example 7. The repairing rate of Example 7 was 62.1 %.

The evaluation result of the self-repairing property is shown in Table 1. Note that the self-repairing property was evaluated according to the following criteria:

Good: the repairing rate was 50 % or more;
Moderate: the repairing rate was 1 % or more and less than 50 %;
Poor: the repairing rate was less than 1 %.

<Example 8>

A film was produced in the same manner as in Example 7 except that polymer compound H7 and polymer compound G1 were mixed in a molar ratio of 1:1.6, and evaluation was performed in the same manner as in Example 7. The repairing rate in Example 8 was 69.1 %. The test piece was broken at the point where the cut surfaces were connected with each other. The evaluation result is shown in Table 1 below.

<Comparative Example 1>

Production of a resin material and a film formation were attempted according to the same method as in Example 1, by using, as polymer compounds, polymer compound CH-1 having a host group and polymer compound CG-1 having a guest group, which do not have a siloxane bond. The film formation could not be performed because the solubility was low. The evaluation result is shown in Table 1 below.

<Comparative Example 2>

Production of a resin material and a film formation were attempted according to the same method as in Example 1, by using, as polymer compounds, polymer compound CH-2 having a host group and polymer compound CG-2 having a guest group, which do not have a siloxane bond. The film formation could not be performed because the solubility was low. The evaluation result is shown in Table 1 below.

<Comparative Example 3>

Production of a resin material and a film formation were attempted according to the same method as in Example 1, by using, as polymer compounds, polymer compound CH-3 having a host group and polymer compound CG-3 having a guest group, which do not have a siloxane bond. The film formation could not be performed because the solubility was low. The evaluation result is shown in Table 1 below.

<Reference Example 1>

Production of a resin material and film formation were performed by the same method as in Example 1, by using, as polymer compounds, side-chain type carboxyl-modified silicone oil (polymer compound A1) and polymer compound G1 described above. In Reference Example 1, although it was possible to form a film, it was not possible to obtain a solid film, and therefore, it was not possible to evaluate the self-repairing property according to the above-described evaluation method. The evaluation results for the solubility, film formability and elasticity of the film are shown in Table 1 below.

<Reference Example 2>

A film was produced in the same manner as in Example 7 using side-chain type carboxyl-modified silicone oil (polymer compound A1) and polymer compound H8 having a host group in a molar ratio of about 1:1. The evaluation results of Reference Example 2 for the solubility, film formability, elasticity of the film, and self-repairing property are shown in Table 1 below. The repairing rate of the film according to Reference Example 2 was 0.08%.

<Reference Example 3>

A film was produced by mixing polymer compound (polymer compound A2) described above and polymer compound G1' having a guest group at a molar ratio of about 1:1. Although it was possible to form a film, it was not possible to obtain a solid film, and therefore it was not possible to evaluate the self-repairing property according to the above-described evaluation method. The evaluation results for the solubility, film formability and elasticity of the film are shown in Table 1 below.

<Table 1>

Table 1

| | Siloxane Bond | Polymer compound having host group | | | Polymer compound having guest group | Polymer compound not having host and guest group | Host group | Guest group | Content of host group (mol%) | Content of guest group (mol%) | *a | *b | *c | *d |
|---|---|---|---|---|---|---|---|---|---|---|---|---|---|---|
| | | ID | Ester group Bound to Si atom | Pentyl group Bound to Si atom | ID | | | | | | | | | |
| Ex. 1 | yes | H1 | yes | - | G1 | - | CD | Oct | 0.32 | 0.46 | Good | Good | Good | Moderate |
| Ex. 2 | yes | H2 | yes | - | G1 | - | CD | Oct | 0.31 | 0.46 | Good | Good | Good | Moderate |
| Ex. 3 | yes | H3 | yes | - | G1 | - | CD | Oct | 0.20 | 0.46 | Good | Good | Good | Moderate |
| Ex. 4 | yes | H4 | yes | - | G1 | - | CD | Oct | 0.37 | 0.46 | Good | Good | Good | Moderate |
| Ex. 5 | yes | H5 | yes | - | G2 | - | CD | Ad | 1.00 | 1.30 | Good | Good | Good | Moderate |
| Ex. 6 | yes | H6 | yes | - | G2 | - | CD | Ad | 0.50 | 1.30 | Good | Good | Good | Moderate |
| Ex. 7 (∗1) | yes | H7 | - | yes | G1 | - | CD | Oct | 0.47 | 0.46 | Good | Good | Good | Good |
| Ex. 8 (*2) | yes | H7 | - | yes | G1 | - | CD | Oct | 0.47 | 0.46 | Good | Good | Good | Good |
| Comp. Ex. 1 | no | CH-1 | - | - | CG-1 | - | CD | Ad | 2.00 | 2.00 | Poor | Poor | - | - |
| Comp. Ex. 2 | no | CH-2 | - | - | CG-2 | - | CD | Ad | 2.00 | 2.00 | Poor | Poor | - | - |
| Comp. Ex. 3 | no | CH-3 | - | - | CG-3 | - | CD | Ad | 1.00 | 1.00 | Poor | Poor | - | - |
| Ref.Ex. 1 | yes | - | - | - | G1 | A1 | - | Oct | - | 0.46 | Good | Good | Poor | - |
| Ref.Ex. 2 | yes | H8 | - | yes | - | A1 | CD | - | 0.63 | - | Good | Good | Good | Poor |

(continued)

| | Siloxane Bond | Polymer compound having host group | | | Polymer compound having guest group | Polymer compound not having host and guest group | Host group | Guest group | Content of host group (mol%) | Content of guest group (mol%) | *a | *b | *c | *d |
|---|---|---|---|---|---|---|---|---|---|---|---|---|---|---|
| | | ID | Ester group Bound to Si atom | Pentyl group Bound to Si atom | ID | | | | | | | | | |
| Ref.Ex. 3 | yes | - | - | - | G1' | A2 | - | Oct | - I | 0.51 | Good | Good | Poor | - |

(∗1) Molar ratio of a polymer compound having host group and a polymer compound having a guest group was 1:1.
(*2) Molar ratio of a polymer compound having host group and a polymer compound having a guest group was 1:1.6.
(*a) Solubility
(*b) Film formability
(*c) Film elasticity
(*d) Self-repairing property

<<Examples 9 and 10>>

In Example 9 and Example 10 (Ex.9 and Ex.10), experiments were performed on a resin material comprising a polymer compound having a host group and containing no siloxane bond and a polymer compound having a guest group and containing a siloxane bond.

<<Example 9>>

A resin material and a film were produced in the same manner as in Example 5, except that 450 mg of polymer compound CH-4 was used as a polymer compound having a host group, and 50 mg of a silicone resin (siloxane crosslinked product, SilForm Flexible Resin (trade name) (manufactured by Momentive)) was used as a polymer compound having a guest group. The evaluation results are given in Table 2.

The film according to Example 9 was murky. Without wishing to be bound by theory, it is considered that this occurred because polymer compound CH-4 having no siloxane bond was dispersed in the film. Note that, among the polymer compounds contained in the resin material, the polymer compound having a guest group exhibited good solubility in the solvent.

<<Example 10>>

A resin material and a film were produced in the same manner as in Example 5, except that 450 mg of polymer compound CH-4 was used as a polymer compound having a host group, and 50 mg of polymer compound G2 was used as a polymer compound having a guest group. The evaluation results are given in Table 2.

The film according to Example 10 was murky. Without wishing to be bound by theory, it is considered that this occurred because polymer compound CH-4 having no siloxane bond was dispersed in the film. Note that, among the polymer compounds contained in the resin material, the polymer compound having a guest group exhibited good solubility in the solvent.

<Table 2>

Table 2

| | Polymer compound having host group | | Polymer compound having guest group | | *a | *b | *c | *d |
|---|---|---|---|---|---|---|---|---|
| | ID | Siloxane Bond | ID, etc. | Siloxane Bond | | | | |
| Ex.9 | CH-4 | no | Silicone resin | yes | - (*1) | Good (*2) | Good | Moderate |
| Ex.10 | CH-4 | no | G2 | yes | - (*1) | Good (*2) | Good | - |
| Comp. Ex.1 | CG-1 | no | CG-1 | no | Poor | Poor | - | - |
| Comp. Ex.2 | CG-2 | no | CG-2 | no | Poor | Poor | - | - |
| Comp. Ex.3 | CG-3 | no | CG-3 | no | Poor | Poor | - | - |

(*1) Good solubility was observed for a polymer compound having a guest group.
(*2) A murky Film was obtained.
(*a) Solubility
(*b) Film formability
(*c) Film elasticity
(*d) Self-repairing property

**Claims**

1. A resin material comprising a host body consisting of a polymer compound having a host group and a guest body consisting of a polymer compound having a guest group, or a host-guest body consisting of a polymer compound having a host group and a guest group,
wherein, at least one of the polymer compound having the host group and the polymer compound having the guest group, or the polymer compound having the host group and the guest group, has a siloxane bond.

2. The resin material according to claim 1, wherein the polymer compound having the host group and the polymer compound having the guest group have a siloxane bond.

3. The resin material according to claim 1, wherein at least one of the polymer compound having the host group and the polymer compound having the guest group, or the polymer compound having the host group and the guest group, has a siloxane bond in the main chain of the polymer.

4. The resin material according to claim 3, wherein the polymer compound having the host group and the polymer compound having the guest group have a siloxane bond in the main chain of the polymer.

5. The resin material according to one of claims 1 to 4, wherein

   the polymer compound having the host group has the host group in a side chain thereof, and
   the polymer compound having the guest group has the guest group in a side chain thereof.

6. The resin material according to one of claims 1 to 4, wherein

   the polymer compound having the host group has the host group in a side chain thereof, and
   the polymer compound having the guest group has the guest group in a terminal thereof.

7. The resin material according to one of claims 1 to 4, wherein

   the polymer compound having the host group has the host group in a terminal thereof, and
   the polymer compound having the guest group has the guest group in a side chain thereof.

8. The resin material according to one of claims 1 to 7, wherein at least one of the polymer compound having the host group and the polymer compound having the guest group, or the polymer compound having the host group and the guest group, is cross-linked.

9. The resin material according to one of claims 1 to 8, wherein at least one of the polymer compound having the host group and the polymer compound having the guest group, or the polymer compound having the host group and the guest group, has a structure represented by the following formula (1):

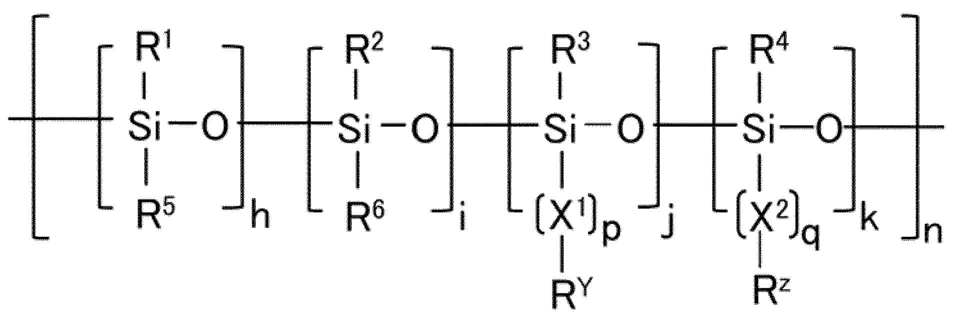

···(1)

[In Formula (1), $R^1$ to $R^6$ are each independently a hydrogen atom, or an alkyl group, a cycloalkyl group, an alkenyl group, an alkoxy group, a cycloalkoxy group, a hydroxy group, a carboxyl group, an aldehyde group, an aryl group, an aryloxy group, a monovalent heterocyclic group, a monovalent spirocyclic compound, a monovalent condensed-ring compound, a group represented by $-R^{R1}-COOH$, or a group represented by $-R^{R2}-C(O)O-R^{R3}$, wherein these groups may have a substituent, and wherein $R^{R1}$, $R^{R2}$ and $R^{R3}$ are each an alkyl group or alkylene group having 1 to 10 carbon atoms; $X^1$ and $X^2$ are each independently O, $Si(OH)_2$, $Si(R^{10})_2$, N(H) or $N(COCH_3)$, or an urethane

bond, an urea bond, an ether bond, an amide bond, or an ester bond, or a carbonyl group, an alkylene group, a cycloalkylene group, an alkenylene group, an alkoxylene group, a divalent heterocyclic group, an urethane group, an urea group, or an arylene groups, and these groups may have a substituent; $R^{10}$ is a hydrogen atom, or an alkyl group, a cycloalkyl group, an alkenyl group, an alkoxy group, a cycloalkoxy group, a hydroxy group, a carboxyl group, an aldehyde group, an aryl group, an aryloxy group, or a heterocyclic group, and these groups may have a substituent; a plurality of $R^{10}$ may be the same or different; each of $X^1$ and $X^2$ may be the same or different if there are a plurality of them; p and q each independently represent an integer of 0 or more; $R^Y$ is a host group; $R^Z$ is a guest group; h, i, j, and k each represent an integer of 0 or more; and they may be the same or different from each other; at least j or k represents an integer of 1 or more; n represents an integer of 1 or more.]

**10.** The resin material according to claim 9, wherein the polymer compound having the host group and the polymer compound having the guest group have the structure represented by the formula (1).

**11.** The resin material according to claim 9 or 10, wherein at least one of the polymer compound having the host group and the polymer compound having the guest group, or the polymer compound having the host group and the guest group, has the structure represented by the formula (1) in the main chain of the polymer.

**12.** The resin material according to claim 9 or 10, wherein at least one of the polymer compound having the host group and the polymer compound having the guest group, or the polymer compound having the host group and the guest group, has:

a vinyl main chain, an acryl main chain, an urethane main chain, an epoxy main chain, a polyimide main chain, a polyester main chain, a poly-urea main chain, or a polycarbonate main chain, and
a side chain having the structure represented by the formula (1).

**13.** The resin material according to one of claims 1 to 12, wherein at least one of the polymer compound having the host group and the polymer compound having the guest group, or the polymer compound having the host group and the guest group, has a structural unit represented by the following formula (2):

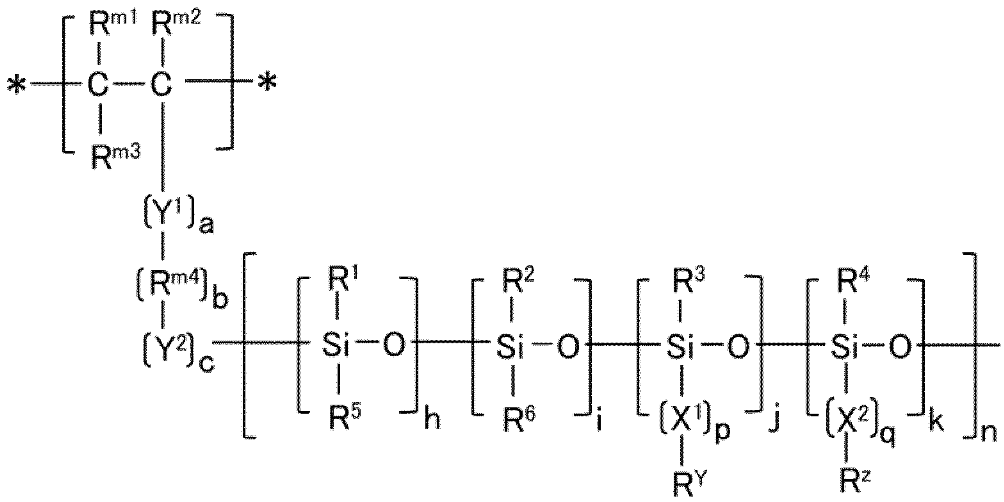

···(2)

[In Formula (2), $R^1$-$R^6$ are each independently a hydrogen atom, or an alkyl group, a cycloalkyl group, an alkenyl group, an alkoxy group, a cycloalkoxy group, a hydroxy group, a carboxyl group, an aldehyde group, an aryl group, an aryloxy group, a monovalent heterocyclic group, a monovalent spirocyclic compound, a monovalent condensed-ring compound, a group represented by $-R^{R1}$-COOH, or a group represented by $-R^{R2}$-C(O)O-$R^{R3}$, wherein these groups may have a substituent, and wherein $R^{R1}$, $R^{R2}$ and $R^{R3}$ are each an alkyl group or alkylene group having 1 to 10 carbon atoms; $X^1$ and $X^2$ are each independently O, $Si(OH)_2$, $Si(R^{10})_2$, N(H), or $N(COCH_3)$, or an urethane bond, an urea bond, an ether bond, an amide bond, or an ester bond, or a carbonyl group, an alkylene group, a cycloalkylene group, an alkenylene group, an alkoxylene group, a divalent heterocyclic group, an urethane group, an urea group, or an arylene groups, and these groups may have a substituent; $R^{10}$ is a hydrogen atom, or an alkyl group, a cycloalkyl group, an alkenyl group, an alkoxy group, a cycloalkoxy group, a hydroxy group, a carboxyl group, an aldehyde group, an aryl group, an aryloxy group, or a heterocyclic group, and these groups may have a substituent; a plurality of $R^{10}$ may be the same or different; each of $X^1$ and $X^2$ may be the same or different if there

are a plurality of them; p and q each independently represent an integer of 0 or more; $R^Y$ is a host group; $R^Z$ is a guest group; h, i, j, and k each represent an integer of 0 or more, these may be the same or different from each other, and at least j or k is an integer of 1 or more; n represents an integer of 1 or more; $R^{m1}$ to $R^{m3}$ are each independently a hydrogen atom or an alkyl group, $Y^1$ is an ether bond, an amide bond, or an ester bond; $R^{m4}$ is an alkylene group, a cycloalkylene group, an alkenylene group, an alkoxylene group, or an arylene group, and these groups may have a substituent, and $Y^2$ is an ether bond, an amide bond, or an ester bond, O, Si $(OH)_2$, $Si(R^{10})_2$, N(H), or $N(COCH_3)$; and a, b, and c each independently represent an integer of 0 to 3; * represents a single bond constituting the main chain of the polymer compound.]

**14.** The resin material according to claim 13, wherein the polymer compound having the host group and the polymer compound having the guest group have the structure represented by the formula (2).

**15.** The resin material according to claim 13 or 14, wherein at least one of the polymer compound having the host group and the polymer compound having the guest group, or the polymer compound having the host group and the guest group, further has a structural unit represented by the following formula (3):

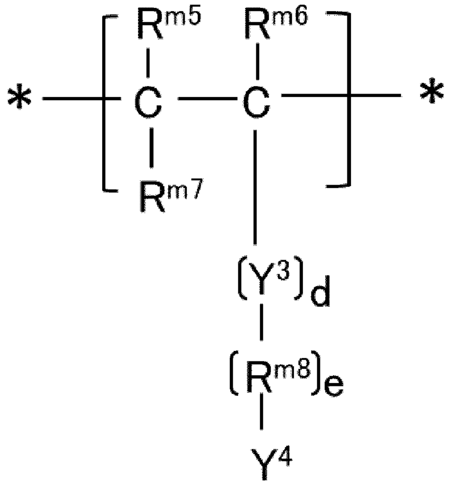

··· (3)

[In Formula (3), $R^{m5}$ to $R^{m7}$ are each independently a hydrogen atom or an alkyl group; $Y^3$ is an ether bond, an amide bond, or an ester bond; $R^{m8}$ is an alkylene group, a cycloalkylene group, an alkenylene bond, an alkoxylene group, or an arylene group, and these groups may have a substituent; $Y^4$ is a hydrogen atom, or an alkyl group, a hydroxyl group, $Si(OH)_3$, $Si(R^{10})_3$, $NH_2$, $C(O)CH_3$, $C(O)NH_2$, or $N(COCH_3)$); d and e are each independently an integer of 0 to 3; * represents a single bond constituting the main chain of the polymer compound.]

**16.** The resin material according to one of claims 9 to 15 wherein, in the formula (1) and/or formula (2),

the host group represented by $R^Y$ is $\alpha$-cyclodextrin, $\beta$- cyclodextrin or $\gamma$- cyclodextrin, and
the guest group represented by $R^Z$ is an alkyl group which can have a substituent, or an aryl group which can have a substituent.

**17.** The resin material according to one of claims 9 to 16, wherein, in the formula (1) and/or formula (2), $R^1$, $R^2$, $R^3$, $R^4$ and $R^5$ are a methyl group.

**18.** The resin material according to one of claims 9 to 16, wherein, in the formula (1) and/or formula (2),

k=0, and
$R^1$, $R^2$, $R^3$, $R^5$ and $R^6$ are an alkyl group.

**19.** The resin material according to one of claims 9 to 16, wherein, in the formula (1) and/or formula (2),

k=0
$R^1$, $R^2$, $R^3$ and $R^5$ are a methyl group, and
$R^6$ is a pentyl group.

**20.** The resin material according to one of claims 9 to 19, wherein, in the formula (1) and/or formula (2),

$(X^1)_p$ is $-(CH_2)_3-N(COCH_3)-$ and j is an integer of 1 or more,
and/or
$(X^2)_q$ is $-R^{11}-CO-O-$ or $-R^{11}-CO-NH-$, wherein $R^{11}$ is an alkylene group having 1 to 12 carbon atoms, which can have a substituent, and k is an integer of 1 or more.

**21.** The resin material according to one of claims 1 to 20, wherein the host group and the guest group are selected from one of the following combinations (a) to (c):

(a) the host group is α-cyclodextrin and
the guest group is at least one selected from the group consisting of (1) a linear alkyl group of 4 to 18 carbon atoms, (2) a linear alkyl group of 4 to 18 carbon atoms having a hydroxy group, (3) a linear alkyl group of 4 to 18 carbon atoms having a carboxyl group, (4) a linear alkyl group of 4 to 18 carbon atoms having an amino group, (5) a cyclic alkyl group, (6) a phenyl group, (7) an azobenzene group, and (8) a cinnamic acid group;
(b) the host group is β-cyclodextrin and
the guest group is at least one selected from the group consisting of (1') t-butyl group, (2') an adamantyl group, (3') an aryl group, (4') an aryl group having a hydroxyl group, (5') an aryl group having a carboxyl group, (6') an aryl group having an amino group, (7') a ferrocenyl group, (8') an azobenzene group, and (9') a dansyl group;
(c) the host group is γ-cyclodextrin and
the guest group is at least one selected from the group consisting of (1") an alkyl group of up to 18 carbon atoms, (2") an alkyl group of up to 18 carbon atoms having a hydroxy group, (3") an alkyl group of up to 18 carbon atoms having a carboxyl group, (4") an alkyl group of up to 18 carbon atoms having an amino group, (5") an adamantyl group, (6") a group having clusters composed of carbon atoms, (7") a dansyl group having an aryl group, (8") a ferrocenyl group, and (9") an anthracenyl group.

FIG. 1

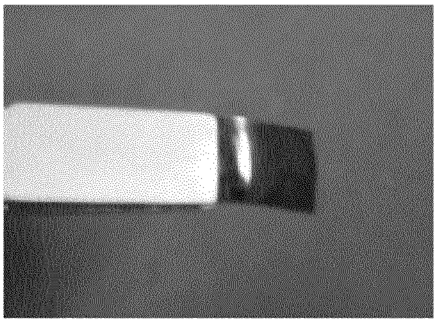

FIG. 2

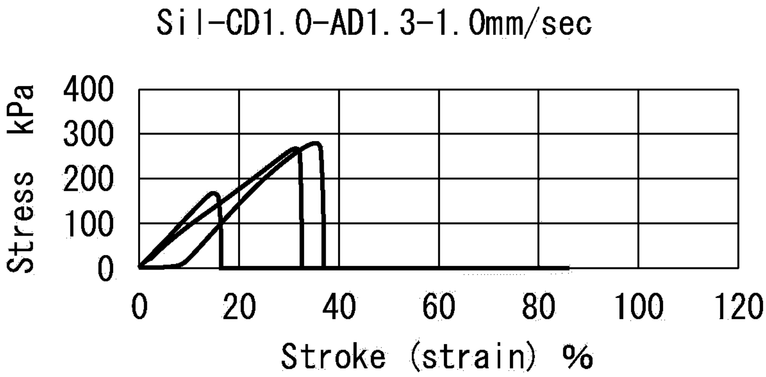


FIG. 3

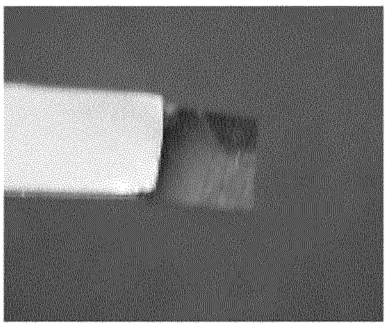

FIG. 4

Sil-CD0.5-AD1.3-1.0mm/sec

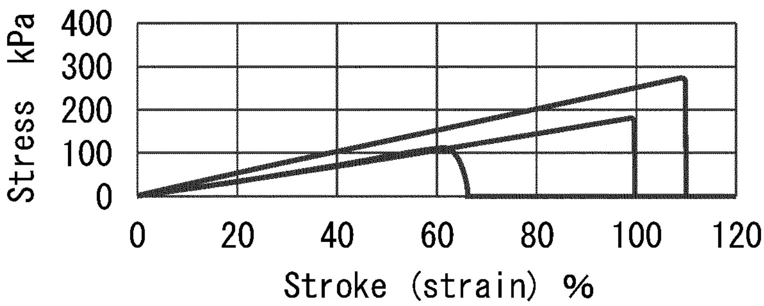

**INTERNATIONAL SEARCH REPORT**

International application No. PCT/JP2021/007192

A. CLASSIFICATION OF SUBJECT MATTER
C08G 77/388(2006.01)i; C08G 77/42(2006.01)i; C08L 83/06(2006.01)i
FI: C08L83/06; C08G77/388; C08G77/42

According to International Patent Classification (IPC) or to both national classification and IPC

B. FIELDS SEARCHED

Minimum documentation searched (classification system followed by classification symbols)
C08G 77/388; C08G 77/42; C08L83/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>A | KNUDSEN, Berit et al., "Noncovalent Linkage of Telechelic Oligo(dimethylsiloxanes) via End Group Attachment of Host-Cyclodextrins and Guest-Adamantanes or Guest-Ferrocenes", Journal of Polymer Science, 2013, 51, 24 72-2482, page 2478, etc. | 1-11, 16-21<br>12-15 |
| X<br>A | NOOMEN, Ahlem et al., "Emulsions of β-cyclodextrins grafted to silicone for the transport of antifungal drugs", Materials Science and Engineering C, 2008, 28, 705-715, page 710, etc. | 1-11, 16-21<br>12-15 |
| X<br>A | YI, Guoliang et al., "Large-rim-tethered permethyl-substituted β-cyclodextrin polysiloxanes for use as chiral stationary phases in open tubular column chromatography", Journal of Chromatography A, 1994, 673, 219-230, page 221, etc. | 1-11, 16-21<br>12-15 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
06 May 2021 (06.05.2021)

Date of mailing of the international search report
18 May 2021 (18.05.2021)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

INTERNATIONAL SEARCH REPORT

International application No. PCT/JP2021/007192

C (Continuation). DOCUMENTS CONSIDERED TO BE RELEVANT

| Category* | Citation of document, with indication, where appropriate, of the relevant passages | Relevant to claim No. |
|---|---|---|
| X<br>A | RAMBARRAN, Talena et al., "Sweet supramolecular elastomers from α, ω-(β-cyclodextrin terminated) PDMS", Chemical Communications, 2016, 52, 6681-6684, page 6682, etc. | 1-11, 16-21<br>12-15 |
| X<br>A | PETERSSON, P. et al., "Evaluation of β-cyclodextrin-based chiral stationary phases for capillary column supercritical fluid chromatography", Journal of Chromatography A, 1994, 684, 297-309, page 298, etc. | 1-11, 16-21<br>12-15 |
| X<br>A | LEVKIN, Pavel A. et al., "Combining the Enantioselectivities of L-Valine Diamide and Permethylated β-Cyclodextrin in One Gas Chromatographic Chiral Stationary Phase", Analytical Chemistry, 2006, 78, 5143-5148, page 5144, etc. | 1-11, 16-21<br>12-15 |
| X<br>A | WANG, Dong-Xin et al., "Separation of Enantiomers of a Chiral lactone on Sol-Gel Gas Chromatography Capillary Columns of Poly(methydrosiloxane) Stationary Phase with Pendant Permethylated β-Cyclodextrin", Chinese Journal of Analytical Chemistry, 2007, 35(3), 360-364, page 362, etc. | 1-11, 16-21<br>12-15 |
| X<br>A | FENG, Wu, "Synthesis and characterization of polysiloxane with β-cyclodextrin side groups", China Surfactant Detergent & Cosmetics, 2008, 38(4), 214-218, page 217, etc. | 1-11, 16-21<br>12-15 |
| X<br>A | COUSIN, H. et al., "Synthesis, NMR Spectroscopic Characterization and Polysiloxane-Based Immobilization of the Three Regioisomeric Monooctenylpermethyl-β-cyclodextrins and Their Application in Enantioselective GC", European Journal of Organic Chemistry, 2003, 3273-3287, page 3279, etc. | 1-11, 16-21<br>12-15 |
| X<br>A | LEI, Lei et al., "Transparent omniphob1c polyurethane coatings containing partially acetylated β-cyclodextrin as the polyol", Chemical Engineering Journal, 2020, 380, 1-9, [Available online 20 August 2019], Retrieved from the Internet: <URL:http://doi.org/10.1016/j.cej.2019.122554>, page 3, etc. | 1-11, 16-21<br>12-15 |
| X<br>A | HELMUT, Ritter et al., "Linkage of α-cyclodextrin-terminated poly(dimethylsiloxanes) by inclusion of quasi bifunctional ferrocene", Beilstein Journal of Organic Chemistry, 2013, 9, 1278-1284, page 1279, etc. | 1-11, 16-21<br>12-15 |

**INTERNATIONAL SEARCH REPORT**

International application No.
PCT/JP2021/007192

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2005-536653 A (WACKER-CHEMIE GMBH) 02 December 2005 (2005-12-02) claims, paragraphs [0031]-[0094], etc. | 1-11, 16-21<br>12-15 |
| X<br>A | JP 2000-506554 A (NOVARTIS AG) 30 May 2000 (2000-05-30) example B15, etc. | 1-11, 16-21<br>12-15 |
| X<br>A | JP 2014-047269 A (TOSHIBA CORP.) 17 March 2014 (2014-03-17) claims, paragraphs [0016], [0127]-[0131], etc. | 1-11, 16-21<br>12-15 |
| X<br>A | US 6316268 B1 (THE REGENTS OF THE UNIVERSITY OF CALIFORNIA) 13 November 2001 (2001-11-13) examples M-N, etc. | 1-11, 16-21<br>12-15 |
| E, X<br>E, A | WO 2021/045203 A1 (OSAKA UNIVERSITY) 11 March 2021 (2021-03-11) claims, examples, fig. 4, etc. | 1-11, 16-19, 21<br>12-15, 20 |

Form PCT/ISA/210 (continuation of second sheet) (January 2015)

**INTERNATIONAL SEARCH REPORT**
Information on patent family members

International application No.
PCT/JP2021/007192

| Patent Documents referred in the Report | Publication Date | Patent Family | Publication Date |
|---|---|---|---|
| JP 2005-536653 A | 02 Dec. 2005 | US 2006/0009592 A1<br>claims, paragraph [0044], etc.<br>EP 1865016 A1<br>CN 1678665 A<br>AT 412690 T<br>AU 2003255443 A<br>CN 102070903 A | |
| JP 2000-506554 A | 10 May 2000 | US 6271332 B1<br>example B15, etc.<br>EP 868457 A1<br>AU 1369397 A<br>AT 223933 T | |
| JP 2014-047269 A | 17 Mar. 2014 | (Family: none) | |
| US 6316268 B1 | 11 Nov. 2001 | AU 5588798 A | |
| WO 2021/045201 A1 | 11 Mar. 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012036069 A
- WO 2013162019 A


### Non-patent literature cited in the description


- *Macromolecules,* 2013, vol. 46 (11), 4575-4579
- *Macromolecules,* 2017, vol. 50 (8), 3254-3261
- *Macromolecules,* 2019, vol. 52 (7), 2659-2668
- *Tetrahedron Letters,* 1984, vol. 25 (31), 3331-3334